(19) Europäisches Patentamt
European Patent Office
Office européen des brevets

(11) EP 3 519 477 B1

(12) EUROPÄISCHE PATENTSCHRIFT

(45) Veröffentlichungstag und Bekanntmachung des Hinweises auf die Patenterteilung:
04.11.2020 Patentblatt 2020/45

(21) Anmeldenummer: 17801602.8

(22) Anmeldetag: 12.09.2017

(51) Int Cl.:
C08G 18/65 (2006.01)          C08G 18/69 (2006.01)
C08G 18/12 (2006.01)          C08G 18/22 (2006.01)
C08G 18/32 (2006.01)

(86) Internationale Anmeldenummer:
PCT/EP2017/072847

(87) Internationale Veröffentlichungsnummer:
WO 2018/059930 (05.04.2018 Gazette 2018/14)

(54) **HYDROXYL-FUNKTIONALISIERTES POLYBUTADIEN-POLYURETHAN-HOTMELT-PREPOLYMER**

HYDROXYL-FUNCTIONALIZED POLYBUTADIENE-POYLURETHANE HOT MELT PREPOLYMER

PRÉPOLYMÈRE POLYBUTADIÈNE À FONCTIONNALITÉ HYDROXYLE-POLYURÉTHANE THERMOFUSIBLE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 30.09.2016 DE 102016218964

(43) Veröffentlichungstag der Anmeldung:
07.08.2019 Patentblatt 2019/32

(73) Patentinhaber: TESA SE
22848 Norderstedt (DE)

(72) Erfinder:
• DIETZE, Sebastian
24568 Kaltenkirchen (DE)
• SCHÜMANN, Uwe
25421 Pinneberg (DE)

(56) Entgegenhaltungen:
EP-A2- 1 279 687     US-A1- 2009 124 751

• Herbert Chao ET AL: "Progress in Chain Extender Evaluation for Polyurethanes Derived from Hydroxyl-Terminated Polybutadiene Resins", , 1 January 2010 (2010-01-01), XP055695624, Retrieved from the Internet: URL:http://www.crayvalley.com/docs/technic al-paper/progress-in-chain-externder-evalu ation-for-polyurethane-rerived-from-ht-pbd .pdf [retrieved on 2020-05-14]

**Beschreibung**

Die vorliegende Erfindung betrifft ein haftklebriges, schmelzbares, hydroxyl-funktionalisiertes Polybutadien-Polyurethan-Hotmelt-Prepolymer, ein Verfahren zu seiner Herstellung, einen Haftklebstoff mit dem Prepolymer als Basispolymer sowie ein Klebeband enthaltend den Haftklebstoff.

Thermisch vulkanisierbare Haftklebebänder sind bekannt. EP 877069 B1 (Beiersdorf) beschreibt eine haftklebrige Folie auf Basis eines thermisch vulkanisierbaren, polyveresterten Kautschuks. Nachteilig daran ist, dass die Polyveresterungsreaktion zu einem vernetzten Elastomer führt, so dass eine Compoundierung des ausreagierten Elastomers mit Vulkanisationshilfsmitteln, Füllstoffen und weiteren Bestandteilen nicht möglich ist. Diese Stoffe müssen bereits vorher eindispergiert beziehungsweise zugemischt werden, bevor die Vernetzungsreaktion fortgeschritten ist. Zu diesem Zeitpunkt ist die Reaktionsmischung bei Raumtemperatur aber noch flüssig oder pastös. Das Polymer wird erst während der Beschichtung durch allmähliches Voranschreiten der Vernetzungsreaktion gebildet. Dies hat den Nachteil, dass die Beschichtungsgeschwindigkeit limitiert ist, denn im noch flüssigen oder pastösen Zustand kann die auf einen Trennliner oder auf ein Trägermaterial beschichtete Reaktionsmischung nicht oder zumindest nicht mit konstanter Schichtdicke aufgewickelt werden. Mit konstanter Schichtdicke können nur feste Polymerfilme aufgewickelt werden. Der Reaktionsfortschritt bis zur Verfestigung der Reaktionsmischung muss also abgewartet werden, bevor das Reaktionsprodukt aufgewickelt werden kann. Entsprechend langsam muss die Beschichtungsgeschwindigkeit eingestellt werden. Zudem haben polyveresterte Kautschuke den potentiellen Nachteil einer leichten hydrolytischen Spaltbarkeit.

Der in der deutschen Offenlegungsschrift DE 38 30 895 A (Hüls) beschriebene Kautschuk aus mindestens zwei Ausgangspolymeren, die über Estergruppen chemisch miteinander verknüpft sind und von denen zumindest eines olefinisch ungesättigt ist, hat als mögliches Basiselastomer eines thermisch vulkanisierbaren Haftklebebandes prinzipiell ähnliche Nachteile.

Das Gleiche gilt für die in EP 0 356 715 B1 (Henkel) beschriebene flüssige oder streichfähige, vulanisierbare Kautschukmischung auf Basis polyveresterter Polymere, von denen zumindest eines olefinisch ungesättigt ist.

Alternativ könnten haftklebrige Polybutadien-basierte Polyurethane ein mögliches Basiselastomer für ein thermisch vulkanisierbares Haftklebeband bilden. Ein Polybutadien-Polyurethan-Haftklebstoff wird in JP 59230076A (Sekisui) beschrieben. Ein Polybutadien-Polyol mit einer Funktionalität von 2,2 bis 2,4 wird darin mit einem Polyisocyanat in einem NCO/OH-Verhältnis von 0,2 bis 0,65 umgesetzt, um ein Polyol mit einer Molmasse von 5000 bis 30000 und einer Funktionalität von 2,0 bis 2,4 zu bilden. Dieses wird anschließend mit einem Polyisocyanat im NCO/OH-Verhältnis von 0,6 bis 1,0 gemischt und so zum gewünschten Produkt umgesetzt. Ein solches Produkt hat im Hinblick auf eine Verwendung als Basiselastomer eines thermisch vulkanisierbaren Haftklebebandes, das in einem lösemittelfreien Compoundier- und Beschichtungsprozess hergestellt wird, den Nachteil, entweder vernetzt und somit für einen Beschichtungsprozess ungeeignet zu sein oder für den Fall, dass innerhalb der in der Schrift angegebenen Grenzen in einem sehr niedrigen NCO/OH-Verhältnis gearbeitet wird und somit keine Vernetzung eintritt, bei Raumtemperatur flüssig und somit ebenfalls als Basiselastomer für einen Beschichtungsprozess ungeeignet zu sein.

In US 3743617A (Kest) werden Polyurethan-Haftklebstoffe auf Basis des Reaktionsproduktes von Isocyanat-reaktive Gruppen tragenden Dien-Polymeren mit Isocyanat-Komponenten in Gegenwart von Tackifier-Harzen offenbart. Nachteilig ist hier die zwingend notwendige Anwesenheit von Tackifier-Harzen, die sich störend auf die Haftungseigenschaften eines daraus hergestellten Klebebandes nach der Vulkanisation auswirken könnten. Zudem schweigt die Schrift im Hinblick auf die Frage, ob und wie auf dieser Basis ein haftklebriges Elastomer mit einem geeignetem Schmelzbeziehungsweise Erweichungsbereich für die Verwendung in einem lösemittelfreien Compoundier- und Beschichtungsprozess hergestellt werden kann.

In US 3515773A (Continental) wird zur Herstellung von Haftklebstoffen die Umsetzung von hydroxylierten Polybutadienen mit aromatischen Isocyanaten beziehungsweise mit Vorprodukten auf Basis von aromatischen Isocyanaten vorgeschlagen und gleichzeitig herausgestellt, dass Tackiness ohne die Verwendung von Tackifier-Harzen und Weichmachern erzielt werden kann. Nachteilig ist die Verwendung von aromatischen Isocyanaten aufgrund der möglichen besonderen Gesundheitsgefahren, die von dieser Substanzklasse ausgehen. Auch diese Schrift schweigt im Hinblick auf die Frage, ob und wie auf dieser Basis ein haftklebriges Elastomer mit einem geeignetem Schmelzbeziehungsweise Erweichungsbereich für die Verwendung in einem lösemittelfreien Compoundier- und Beschichtungsprozess hergestellt werden kann.

In WO 1998030648 A1(Shell) werden thermoplastische Polyurethan-Haftklebstoffe auf Basis von hydrierten Polydien-Diolen und -monoolen beschrieben. Diese haben im Hinblick auf das Ziel, ein haftklebriges, schmelzbares Basiselastomer für ein thermisch vulkanisierbares Haftklebeband zu finden, den Nachteil, thermisch nicht vulkanisierbar zu sein.

Aufgabe der Erfindung ist es, ein haftklebriges Elastomer bereitzustellen, das thermisch vulkanisierbar ist und in einem Temperaturbereich, der mindestens 30°C, besser mindestens 50°C unterhalb der Anspringtemperatur der Vulkanisationsreaktion liegt, als Schmelze in einem Compoundier- und Extrusionsprozess verarbeitet werden kann. Bei Raumtemperatur muss das haftklebrige Elastomer genügend fest beziehungsweise hochviskos sein, dass es als auf einen Trennliner oder auf ein Trägermaterial beschichteter Film zu einer Rolle aufgewickelt werden kann, ohne dass es an der Seite herausfließt beziehungsweise durch den Wickeldruck herausgequetscht wird.

Gelöst wird diese Aufgabe durch ein hydroxyl-funktionalisiertes Polybutadien-Polyurethan-Hotmelt-Prepolymer, umfassend das chemische Umsetzungsprodukt zumindest eines Polybutadien-Diols, zumindest eines Kettenverlängerers mit einer Hydroxyl-Funktionalität von zwei und einer Molmasse von kleiner oder gleich 300 g/mol und optional zumindest eines Polybutadien-Polyols mit einer zahlengemittelten, mittleren Funktionalität zwischen größer 2,0 und kleiner oder gleich 3,0 mit zumindest einem aliphatischen oder alicyclischen Diisocyanat.

Das hydroxyl-funktionalisierte Polybutadien-Polyurethan-Hotmelt-Prepolymer ist also insbesondere dadurch gekennzeichnet, dass es durch Umsetzung zumindest eines Polybutadien-Diols und zumindest eines Kettenverlängerers mit einer Hydroxyl-Funktionalität von zwei und einer Molmasse von kleiner oder gleich 300 g/mol mit zumindest einem aliphatischen oder alicyclischen Diisocyanat erhältlich ist.

Besonders geeigneter Weise haben solche erfindungsgemäßen hydroxyl-funktionalisierten Polybutadien-Polyurethan-Hotmelt-Prepolymere bei Raumtemperatur eine feste Konsistenz und sind haftklebrig, können zudem in einem Temperaturbereich zwischen ungefähr 40°C und 100°C als Schmelze in einem Compoundier- und Extrusionsprozess verarbeitet werden und sind thermisch vulkanisierbar, insbesondere in einem Temperaturbereich bis zu 230°C.

Polymere oder Prepolymere, die die Eigenschaft besitzen, schmelzfähig und somit thermoplastisch verarbeitbar zu sein, werden in dieser Schrift, wie im Sprachgebrauch des Fachmanns üblich, als Hotmelts bezeichnet.

Unter einem hydroxyl-funktionalisierten Polyurethan-Hotmelt Prepolymer wird in dieser Schrift ein durch eine nicht-stöchiometrische Polyadditionsreaktion aus Polyolen und Diisocyanaten mit einer Überzahl an Hydroxylgruppen hergestelltes schmelzfähiges Reaktionsprodukt verstanden, das bei Raumtemperatur derart fest und formstabil ist, dass bei Raumtemperatur eine Compoundierung in bekannten Mischaggregaten (sowie insbesondere auch eine Ausformung oder ähnliche Verarbeitungsschritte) ohne das Hinzufügen von Lösemitteln, Verdünnungsmitteln oder anderer, die Viskosität herabsetzender Zusatzstoffe nicht möglich ist. Bekannte Mischaggregate sind beispielsweise Kneter, Innenmischer, Extruder, Planetwalzenextruder, Planetenmischer, Butterfly-Mischer oder Dissolver. Die Verarbeitbarkeit eines schmelzfähigen Reaktionsprodukts im Sinne dieser Schrift ist erst dann möglich, wenn das schmelzfähige Reaktionsprodukt erwärmt wird, wobei die Wärme von außen durch Beheizung zugeführt oder durch Scherung erzeugt werden kann. Typische Verarbeitungstemperaturen für schmelzfähige Reaktionsprodukte im Sinne dieser Schrift liegen im Bereich von 50° bis 100 °C, mindestens betragen sie 40 °C. Als Raumtemperatur wird in dieser Schrift der Temperaturbereich von 20 °C bis 25 °C, idealerweise 23 °C, verstanden.

Ein schmelzfähiges Reaktionsprodukt im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10,0 rad/s gemessene komplexe Viskosität von mindestens 3.000 Pas, vorzugsweise mindestens 6.000 Pas, idealerweise mindestens 10.000 Pas. Bei Temperaturen im Bereich zwischen 40°C und 100°C und einer Oszillationsfrequenz von 10,0 rad/s verringert sich die komplexe Viskosität bis auf weniger als 1.000 Pas, vorzugsweise bis auf weniger als 500 Pas, idealerweise bis auf weniger als 200 Pas. Die Oszillationsfrequenz entspricht der Winkelfrequenz.

Die komplexe Viskosität $\eta^*$ ist folgendermaßen definiert: $\eta^* = G^* / \omega$

($G^*$ = komplexer Schubmodul, $\omega$ = Winkelfrequenz).

Die weiteren Definitionen lauten: $$G^* = \sqrt{(G')^2 + (G'')^2}$$

($G''$ = Viskositätsmodul (Verlustmodul), $G'$ = Elastizitätsmodul (Speichermodul)).

$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).

$$\omega = 2\pi \cdot f \ (f = \text{Frequenz}).$$

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) * \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G" = (\tau/\gamma) * \sin(8)$ ($\tau$ = Schubspannung, $\gamma$ = Deformation, $\delta$ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10°$ bis $10^1$ rad/sec, G' zumindest zum Teil im Bereich von $10^3$ bis $10^7$ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich $10°$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Unter einem Polybutadien-Diol werden in dieser Schrift alle hydroxyl-funktionalisierten Polybutadiene verstanden, deren zahlengemittelte, mittlere Hydroxyl-Funktionalität zwei oder etwas weniger als zwei, mindestens aber 1,5, vorzugsweise mindestens 1,8 beträgt. Keinesfalls ist die zahlengemittelte, mittlere Hydroxyl-Funktionalität eines Polybutadien-Diols größer als zwei.

Kettenverlängerer im Sinne dieser Schrift sind alle Hydroxylgruppen tragenden Verbindungen mit einer Hydroxyl-Funktionalität von zwei und einer Molmasse von kleiner oder gleich 300 g/mol. Sie tragen keine weiteren isocyanatreaktiven Gruppen. Es sind somit Diole mit einer Molmasse von kleiner oder gleich 300 g/mol. Bekanntlich sind viele Kettenverlängerer, die zur Herstellung von Polyurethanen auf Basis von Polyester- oder Polyether-Polyolen Verwendung finden, nicht mit Polybutadien-Diolen und -Polyolen verträglich. Es kommt zu Entmischungen. Erfindungsgemäß bevorzugt sind die mit Polybutadien-Diolen und -Polyolen verträglichen Kettenverlängerer. Dies sind beispielsweise N,N-Diisopropanolanilin (CAS-Nr. 003077-13-2), 2,2,4-Trimethyl-1,3-pentandiol (CAS-Nr. 144-19-4) und 2-Butyl-2-Ethyl-1,3-propandiol (CAS-Nr. 115-84-4). Besonders bevorzugt ist 2-Ethyl-1,3-hexandiol (CAS-Nr. 94-96-2). Die Erkenntnisse über die mit Polybutadien-Diolen und -Polyolen verträglichen Kettenverlängerer gehören zum Stand der Technik. Sie sind beispielsweise publiziert in Herbert Chao, Nan Tian, Cray Valley, USA, LLC, Exton, PA, PCI, April 2010.

Zur Erzielung einer hohen Haftklebrigkeit (eines hohen Tacks) unter gleichzeitiger Vermeidung einer zu großen Weichheit des hydroxyl-funktionalisierten Polybutadien-Polyurethan-Hotmelt-Prepolymers, die zu einer verminderten Scherfestigkeit führen würde, ist es vorteilhaft, wenn der anzahlmäßige Anteil der zur Bildung des hydroxyl-funktionalisierten Polyurethan Hotmelt-Prepolymers eingebrachten Hydroxylgruppen, die von dem zumindest einen Kettenverlängerer stammen, zwischen größer oder gleich 20,0 % und kleiner oder gleich 80,0 %, bevorzugt zwischen größer oder gleich 30,0 % und kleiner oder gleich 70,0 % beträgt. Der anzahlmäßige Anteil entspricht stets dem Stoffmengenanteil.

Das optionale zumindest eine Polybutadien-Polyo ist ein hydroxyl-funktionalisiertes Polybutadien mit einer zahlengemittelten, mittleren Hydroxyl-Funktionalität zwischen größer 2,0 und kleiner oder gleich 3,0.

Unter der zahlengemittelten, mittleren Hydroxyl-Funktionalität wird die mittlere Zahl der Hydroxylgruppen pro Molekül eines Polyols verstanden. Sie wird in dieser Schrift auf das zahlengemittelte, mittlere Molekulargewicht des jeweiligen Polyols bezogen und nach der folgenden Formel berechnet:

$$f = M_n [g/mol] \times OHZ\ [mmol\ OH/kg]/10^6$$

f ist die zahlengemittelte, mittlere Hydroxyl-Funktionalität. $M_n$ ist das zahlengemittelte mittlere Molekulargewicht des jeweiligen Polyols in der Einheit [g/mol] und OHZ ist die Hydroxylzahl des Polyols in der Einheit [mmol OH / kg]. Die Hydroxylzahl ist ein Maß für den Gehalt an Hydroxylgruppen in einem Polyol.

Die Bestimmung der Hydroxylzahl erfolgt dabei nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.
Dies erfolgt nach folgender Formel:

$$OHZ\ [mmol\ OH/kg] = OHZ[mg\ KOH/g] \times 1000/56,1.$$

56, 1 ist dabei die Molmasse von KOH.

Die Hydroxylgruppen der Polybutadien-Diole und -Polyole können primär oder sekundär an die Polybutadien-Kette gebunden sein. Die Butadien-Einheiten der Polybutadien-Kette können in einer 1,4- cis oder trans-Form oder in einer 1,2-Form mit Vinyl-Gruppen in der Seitenkette oder in einer gemischten Weise miteinander verknüpft sein.

Polybutadien-Diole werden durch anionische Polymerisation hergestellt während Polybutadien-Polyole mit einer zahlengemittelten, mittleren Funktionalität zwischen größer 2,0 und kleiner oder gleich 3,0 durch radikalische Polymerisation hergestellt werden. Polybutadien-Diole sind unter dem Handelsnamen Krasol ® kommerziell verfügbar, Polybutadien-Polyole mit einer zahlengemittelten, mittleren Funktionalität zwischen größer 2,0 und kleiner oder gleich 3,0 unter dem Handelsnamen Poly bd ®, beide Sorten von der Firma Cray Valley.

Zur Erzielung einer hohen Haftklebrigkeit (eines hohen Tacks) ist es vorteilhaft, Polybutadien-Diole mit einer zahlengemittelten mittleren Molmasse zwischen größer 1000 g/mol und kleiner 5000 g/mol, bevorzugt zwischen größer oder gleich 2000 g/mol und kleiner oder gleich 3000 g/mol zu verwenden.

Auch die optionalen Polybutadien-Polyole mit einer zahlengemittelten, mittleren Funktionalität zwischen größer 2,0 und kleiner oder gleich 3,0 sollten aus dem gleichen Grund vorteilhafterweise eine zahlengemittelte mittleren Molmasse zwischen größer 1000 g/mol und kleiner 5000 g/mol, bevorzugt zwischen größer oder gleich 2000 g/mol und kleiner oder gleich 3000 g/mol haben.

Die Polybutadien-Polyole mit einer zahlengemittelten, mittleren Funktionalität zwischen größer 2,0 und kleiner oder gleich 3,0 können optional zur Herstellung des hydroxyl-funktionalisierten Polybutadien-Polyurethan-Hotmelt-Prepolymers mitverwendet werden, um Verzweigungsstellen in das Prepolymer einzubauen. Ein gewisser Verzweigungsgrad hätte den Vorteil, dass das beschichtete Prepolymer während der thermischen Vulkanisation im Verlauf der Temperaturzuführung, aber vor dem Anspringen der Vulkanisationsreaktion weniger stark erweichen würde und somit in dieser Phase unmittelbar vor der durch die Vulkanisation hervorgerufenen Aushärtung eine höhere Scherfestigkeit besitzen würde.

Bei Mitverwendung der optionalen Polybutadien-Polyole mit einer zahlengemittelten, mittleren Funktionalität zwischen größer 2,0 und kleiner oder gleich 3,0 zur Herstellung des hydroxyl-funktionalisierten Polybutadien-Polyurethan-Hotmelt-Prepolymers muss darauf geachtet werden, dass keine Gelierung eintritt, dass also der Verzweigungsgrad im Verhältnis zur Länge der erzeugten Prepolymerketten nicht so hoch ist, dass es zu einer Vernetzung während der Prepolymerherstellung kommt.

Der Grad der Verzweigung wird so eingestellt, dass die Schmelzbarkeit des hydroxyl-funktionalisierten Polybutadien-Polyurethan-Hotmelt-Prepolymers gewährleistet ist, dass sich also keine vernetzten Strukturen ausbilden. Um vernetzte Strukturen auszuschließen, darf der sogenannte Gelpunkt nicht überschritten werden. Der theoretische Gelpunkt lässt sich mit der Gelpunktsgleichung von P.J.Flory berechnen. Eine aus der Flory-Gleichung abgeleitete Formel zur Abschätzung des Gelierungs- NCO/OH-Verhältnisses in Polyurethan-Bildungsreaktionen aus Diolen und Triolen mit Diisocyanaten im Unterschuss, lautet:

$$\left[\frac{NCO}{OH}\right]_{Gelierung} = \cfrac{1}{1 + \cfrac{1}{\cfrac{(Diol\text{-} OH)}{(Triol\text{-}OH)} + 1}}$$

Mit Diol-OH ist in dieser Formel die Gesamtanzahl der an der Prepolymer-Bildungsreaktion beteiligten Hydroxylgruppen gemeint, die von Polyolen herrühren, deren Hydroxyl-Funktionalität kleiner oder gleich zwei ist. Darin eingeschlossen sind auch die Kettenverlängerer. Mit Triol-OH ist die Gesamtanzahl der an der Prepolymer-Bildungsreaktion beteiligten Hydroxylgruppen gemeint, die an Polyole gebunden sind, deren Funktionalität größer zwei und kleiner oder gleich drei ist.

Wird das Gelierungs-NCO/OH-Verhältnis erreicht oder überschritten, muss mit der Ausbildung vernetzter Strukturen, also mit dem Einsetzen einer Gelierung, gerechnet werden. Die Formel liefert nur einen ungefähren, aber für die Praxis in der Regel ausreichenden Anhaltspunkt, ab welchem NCO/OH-Verhältnis die tatsächliche Gelierung eintritt.

Der anzahlmäßige Anteil der zur Bildung des hydroxyl-funktionalisierten Polybutadien-Polyurethan-Hotmelt-Prepolymers eingebrachten Hydroxylgruppen, die von dem optionalen Polybutadien-Polyol/ den optionalen Polybutadien-Polyolen mit einer zahlengemittelten, mittleren Funktionalität zwischen größer 2,0 und kleiner oder gleich 3,0 stammen, beträgt vorteilhafterweise maximal 50,0 %, bevorzugt maximal 30,0 %, besonders bevorzugt maximal 10%. Höhere Anteile erfordern ein unvorteilhaft geringes NCO/OH-Verhältnis, das eine unvorteilhaft niedrige Erweichungstemperatur des hydroxyl-funktionalisierten Polybutadien-Polyurethan-Hotmelt-Prepolymers zur Folge hätte. Im Hinblick auf die Prozesssicherheit beträgt der Anteil ganz besonders vorteilhaft 0,0%. Bei einem Anteil von 0,0% ist das Risiko der vorzeitigen Ausbildung vernetzter Strukturen, also das Einsetzen einer Gelierung während der Prepolymer-Herstellung, am geringsten.

Das hydroxyl-funktionalisierte Polybutadien-Polyurethan-Hotmelt-Prepolymer wird durch Umsetzung der genannten Diole/Polyole mit zumindest einem aliphatischen oder alicyclischen Diisocyanat erhalten.

Unter aliphatischen oder alicyclischen Diisocyanaten werden in dieser Schrift alle organischen Polyisocyanate mit einer Isocyanat-Funktionalität von zwei verstanden, in denen die Isocyanat-Gruppen nicht direkt an ein nach der Hückel-Regel aromatisches Ringsystem gebunden sind.

Beispiele für aliphatische oder alicyclische Diisocyanate sind Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethan-4,4'-diisocyanat (H12MDI), 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-I-yl)-cyclohexan, 2-Heptyl-3,4-bis(9-isocyanatononyl)-1-pentyl-cyclohexan, Norbonandiisocyanatomethyl sowie m-Tetramethyl-xylen-diisocyanat (TMXDI). Besonders bevorzugt sind Isophorondiisocyanat (CAS-Nr. 4098-71-9) und Dicyclohexylmethan-4,4'-diisocyanat (CAS-Nr. 5124-30-1).

Das Verhältnis der Gesamtanzahl der Isocyanat-Gruppen zur Gesamtanzahl der Hydroxylgruppen der an der chemischen Umsetzung zum hydroxyl-funktionalisierten Polybutadien-Polyurethan-Hotmelt-Prepolymer beteiligten Stoffe liegt in einer vorteilhaften Ausführungsform zwischen größer 0,65 und kleiner 1,0, bevorzugt zwischen größer oder gleich 0,70 und kleiner oder gleich 0,975, besonders bevorzugt zwischen größer oder gleich 0,75 und kleiner oder gleich 0,95. Die bevorzugten Verhältnisse führen zu Hotmelt-Prepolymeren mit einer bei Raumtemperatur besonders festen Konsistenz und einer gleichzeitig hohen Haftklebrigkeit (eines hohen Tacks).

Bevorzugt umfasst das erfindungsgemäße hydroxyl-funktionalisierte Polybutadien-Polyurethan-Hotmelt-Prepolymer das chemische Umsetzungsprodukt aus ausschließlich einem oder mehreren Polybutadien-Diolen, optional einem oder mehreren Polybutadien-Polyolen mit einer zahlengemittelten, mittleren Funktionalität zwischen größer 2,0 und kleiner oder gleich 3,0 und einem oder mehreren Kettenverlängerers mit einer Hydroxyl-Funktionalität von zwei und einer Molmasse von kleiner oder gleich 300 g/mol mit einem oder mehreren aliphatischen oder alicyclischen Diisocyanaten.

An der chemischen Umsetzung zum hydroxyl-funktionalisierten Polybutadien-Polyurethan-Hotmelt-Prepolymer sind also bevorzugt keine zusätzlichen, anderen Polyole oder Isocyanate beteiligt, insbesondere keine Polyether-Polyole, keine Polyester-Polyole und keine aromatischen Diisocyanate. Es wird angenommen, dass sich bei Verwendung des erfindungsgemäßen hydroxyl-funktionalisierten Polybutadien-Polyurethan-Hotmelt-Prepolymers als Basiselastomer zur Herstellung eines thermisch vulkanisierbaren Haftklebstoffs Polyether- und Polyester-Polyole unvorteilhaft auf die Haftungseigenschaften nach der Vulkanisationsreaktion auswirken, insbesondere auf die Haftungseigenschaften auf geölten Blechen. Weiterhin wird angenommen, dass sich aromatische Diisocyanate unvorteilhaft auf die Haftklebrigkeit (den Tack) auswirken.

Das erfindungsgemäße hydroxyl-funktionalisierte Polybutadien-Polyurethan-Hotmelt-Prepolymer wird bevorzugt ohne die Verwendung von Lösemitteln hergestellt. Die Einbeziehung von Lösemitteln in den Herstellprozess ist zwar technisch leicht möglich, bringt aber normalerweise keine Vorteile.

Zur Beschleunigung der Reaktion erfolgt die chemische Umsetzung zum hydroxyl-funktionalisierten Polybutadien-Polyurethan-Hotmelt-Prepolymer bevorzugt unter Zusatz eines Katalysators. Es können ein oder mehrere dem Fachmann bekannte Katalysatoren wie zum Beispiel tertiäre Amine, bismut- oder zinnorganische Verbindungen eingesetzt werden, um nur einige zu nennen. Sehr vorteilhaft können Bismut und Kohlenstoff enthaltende Katalysatoren eingesetzt werden, bevorzugt ein Bismutcarboxylat oder ein Bismutcarboxylat-Derivat. Besonders vorteilhaft ist Bismuttrisneodecanoat (CAS-Nr. 34364-26-6).

Die Konzentration der Katalysatoren wird auf die gewünschte Reaktionsgeschwindigkeit abgestimmt und liegt typischerweise zwischen 0,01 Gew.% und 0,5 Gew.% des herzustellenden hydroxyl-funktionalisierten Polybutadien-Polyurethan-Hotmelt-Prepolymers.

In einer möglichen Ausführungsform enthält das hydroxyl-funktionalisierte Polybutadien-Polyurethan-Hotmelt-Prepolymer ein oder mehrere weitere Rezeptierungsbestandteile wie zum Beispiel Füllstoffe, Mikrokugeln, Tackifier-Harze, Weichmacher, Bitumen, Alterungsschutzmittel (Antioxidantien), Lichtschutzmittel, UV-Absorber, rheologische Additive, sowie sonstige Hilfs- und Zusatzstoffe.

Als Füllstoffe können sowohl verstärkende, wie zum Beispiel Ruß, als auch nicht verstärkende, wie zum Beispiel Carbonate, insbesondere Kreide, oder Sulfate, insbesondere Bariumsulfat, eingesetzt werden. Weitere Beispiele sind Silikate, wie etwa Talkum oder Glimmer, Hydroxide oder Oxide, wie etwa Quarzmehl, Aluminiumhydroxid, Zinkoxid oder Calciumoxid. Mikrokugeln können Mikrovollglaskugeln, Mikrohohlglaskugeln und/oder Mikrokunststoffkugeln aller Art sein. Die Mikrokunststoffkugeln können vorexpandiert sein oder unexpandiert vorliegen. Die Partikelgröße im expandierten Zuustand liegt meist im Bereich zwischen 20 und 150 $\mu$m. Auch Mischungen der genannten Stoffe können eingesetzt werden.

Tackifier-Harze sind alle bekannten klebrigmachenden Harze, zum Beispiel Kolophoniumharze, Polyterpenharze, Kohlenwasserstoffharze oder Terpenphenolharze. Beispiele für Weichmacher sind Phthalate, zum Beispiel Diethylhexylphthalat oder Diisononylphthalat, Dibenzoate, Alkylsulfonsäureester des Phenols, 1,2-Cyclohexandicarbonsäurediisononylester oder Citronensäuretriethylester. Mineralöle sind ebenfalls Beispiele für Weichmacher. Besonders geeignet sind Paraffine und naphthenische Öle.

Die Verwendung von Antioxidantien kann vorteilhaft sein, ist aber nicht zwingend notwendig. Zu den geeigneten Antioxidantien zählen zum Beispiel sterisch gehinderte Phenole, Hydrochinon-Derivate, Amine, organische Schwefelverbindungen oder organische Phosphorverbindungen.

Lichtschutzmittel und UV-Absorber können optional ebenso eingesetzt werden. Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

Beispiele für rheologische Additive, die optional zugesetzt werden können, sind pyrogene, hydrophobierte oder nicht hydrophobierte Kieselsäuren, Schichtsilikate (Bentonite), hochmolekulare Polyamidpulver oder Rizinusölderivat-Pulver.

Die chemische Umsetzung zum hydroxyl-funktionalisierten Polybutadien-Polyurethan-Hotmelt-Prepolymer kann vorteilhaft in Gegenwart eines oder mehrerer Epoxidharze erfolgen. Unter einem Epoxidharz werden dabei Kunstharze verstanden, die Epoxidgruppen tragen. Vorteilhaft sind Bisphenol-basierte Epoxidharze, insbesondere Bisphenol A-basierte, aber auch Bisphenol F-basierte. Besonders vorteilhaft ist ein bei Raumtemperatur flüssiges Epoxidharz, insbesondere das Reaktionsprodukt Bisphenol-A-Epichlorhydrin mit einem zahlengemittelten, mittleren Molekulargewicht von kleiner oder gleich 700 g/mol (CAS-Nr. 25068-38-6). Andere vorteilhafte Epoxidharze sind Epoxyphenol-Novolak-Harze, Epoxy-dicyclopentadienphenol-Novolak-Harze, Epoxykresol-Novolak-Harze, Glycidylamin-basierte Epoxidharze, insbesondere Triglycidylether von para-Aminophenol, Triglycidylether von meta-Aminophenol, Tetraglycidylether von Methylendianilin, Hydroxylphenyl-basierte Epoxidharze sowie aliphatische Epoxidharze, insbesondere cycloaliphatische. Zu nennen ist hier insbesondere 3,4-Epoxycyclohexylmethyl-3',4'-epoxycyclohexancarboxylat (CAS-Nr. 2386-87-0).

Eine vorteilhafte Konzentration des Epoxidharzes in dem hydroxyl-funktionalisierten Polybutadien-Polyurethan-Hotmelt-Prepolymer liegt zwischen einschließlich 5 Gew.% und einschließlich 40 Gew.%. Besonders vorteilhaft ist eine Konzentration zwischen einschließlich 10 Gew.% und einschließlich 30 Gew.%.

Das erfindungsgemäße, hydroxyl-funktionalisierte Polybutadien-Polyurethan-Hotmelt-Prepolymer wird vorteilhaft als Basiselastomer zur Herstellung eines thermisch vulkanisierbaren Haftklebstoffs und/oder einer thermisch vulkanisierbaren Haftklebstoffschicht beziehungsweise eines thermisch vulkanisierbaren Haftklebebandes verwendet. Die Produkteigenschaften des erfindungsgemäßen, hydroxyl-funktionalisierten Polybutadien-Polyurethan-Hotmelt-Prepolymers sind besonders vorteilhaft für die Herstellung einer thermisch vulkanisierbaren Haftklebstoffschicht beziehungsweise eines thermisch vulkanisierbaren Haftklebebandes in einem lösemittelfreien, kontinuierlichen Compoundier- und Beschichtungsprozess geeignet. Der Zusatz von Vulkanisationsstoffen wie zum Beispiel Schwefel oder schwefelspendenden Stoffen oder Vulkanisationsbeschleunigern wie zum Beispiel 2,2'-Dibenzothiazyldisulfid (MBTS), Tetrabenzylthiuramdisulfid (TBzTD) oder Zink-bis(dibenzyldithiocarbamat (ZBEC) sowie Vulkanisationshilfs- und zusatzstoffen wie zum Beispiel Zinkoxid, Fettsäuren oder deren Salze zu dem - gegebenenfalls Epoxidharze und/oder andere Komponenten enthaltenden - Polybutadien-Polyurethan-Hotmelt-Prepolymer erfolgt bevorzugt während des kontinuierlichen Compoundier- und Beschichtungsprozesses, besonders bevorzugt durch Zudosierung in einem kontinuierlich arbeitendem Mischaggregat, insbesondere einem Compoundierextruder. Auch die bereits genannten weiteren Rezeptierungsbestandteile des hydroxyl-funktionalisierten Polybutadien-Polyurethan-Hotmelt-Prepolymers, wie zum Beispiel Füllstoffe, Mikrokugeln, Tackifier-Harze, Weichmacher, Bitumen, Alterungsschutzmittel (Antioxidantien), Lichtschutzmittel, UV-Absorber, rheologische Additive, sowie sonstige Hilfs- und Zusatzstoffe können vorteilhaft in einem kontinuierlich arbeitendem Mischaggregat, insbesondere einem Compoundierextruder zudosiert werden. In einer bevorzugten Verwendung wird die thermisch vulkanisierbare Haftklebstoffschicht beziehungsweise das thermisch vulkanisierbare Haftklebeband zu thermisch vulkanisierbaren, haftklebrigen Polyurethanformkörpern oder Stanzlingen weiter verarbeitet.

Die Herstellung des hydroxyl-funktionalisierten Polybutadien-Polyurethan-Hotmelt-Prepolymers erfolgt bevorzugt batchweise (also diskontinuierlich), zum Beispiel in einem beheizbaren Mischkessel, Kneter, Planetenmischer oder Dissolver. Um Blasenfreiheit zu erreichen, wird das Mischen unter vermindertem Druck bevorzugt. Hohe Konzentrationen der Vulkanisationsbeschleuniger erniedrigen die Härtungsstemperatur, erhöhen aber die Gefahr, dass während der Verarbeitung die Härtung (Vulkanisation) bereits anspringt. Liegt die Härtungstemperatur der Klebemasse unterhalb von 130 °C, ist es bevorzugt, für die Compoundierung im Extruder als Compoundierextruder einen Planetwalzenextruder zu verwenden, da hiermit die Compoundiertemperaturen unterhalb von 90 °C, insbesondere bevorzugt unterhalb von 80 °C, gehalten werden können.

Das erfindungsgemäße hydroxyl-funktionalisierte Polybutadien-Polyurethan-Hotmelt-Prepolymers zeigt eine hervorragende Kombination von Produkteigenschaften, die auch für den Fachmann derartig nicht vorherzusehen waren.

Das erfindungsgemäße Prepolymer ist haftklebrig (tacky), ohne dass es des Zusatzes eines Tackifier-Harzes bedarf. Es haftet sowohl auf verzinktem und unverzinktem Stahl als auch auf kataphoretisch tauchlackierten Blechen sowie auf anderen lackierten Substraten. Weiterhin zeichnet es sich durch seine Fähigkeit zur Aufnahme von Prozessölen aus, so dass es auch auf geölten Blechen, wie sie in der Automobilindustrie im Rohbau verwendet werden, gut haftet. Überraschend wurde gefunden, dass durch die Mitverwendung der optionalen Polybutadien-Polyole mit einer zahlengemittelten, mittleren Funktionalität zwischen größer 2,0 und kleiner oder gleich 3,0 in den angegebenen anteiligen Grenzen die Haftklebrigkeit (der Tack) des erfindungsgemäßen Prepolymers verbessert wird.

Das erfindungsgemäße Prepolymer ist bei Raumtemperatur genügend fest beziehungsweise hochviskos, dass es als auf einen Trennliner oder auf ein Trägermaterial beschichteter Film zu einer Rolle aufgewickelt werden kann, ohne dass es an der Seite herausfließt beziehungsweise durch den Wickeldruck herausgequetscht wird. Im Temperaturbereich zwischen 40°C und 100°C nimmt die Viskosität des erfindungsgemäßen Prepolymers so weit ab, dass es in einem kontinuierlichen oder auch diskontinuierlichen Compoundier- und Beschichtungsprozess verarbeitet werden kann. Dabei können Vulkanisationsstoffe wie zum Beispiel Schwefel, Vulkanisationsbeschleuniger sowie Vulkanisationshilfs- und zusatzstoffe homogen zugemischt werden, ohne dass es zum Anspringen der Vulkanisationsreaktion kommt. Das mit den Vulkanisationsstoffen wie zum Beispiel Schwefel, Vulkanisationsbeschleunigern sowie Vulkanisationshilfs- und zusatzstoffen abgemischte erfindungsgemäße Prepolymer ist bei Raumtemperatur sowie bei Temperaturen bis 40°C über einen Zeitraum von mindestens einem Jahr lagerstabil. Es härtet im Temperaturbereich zwischen 130°C und 230°C innerhalb kurzer Zeit (ungefähr 5 bis 30 Minuten, je nach verwendetem Beschleunigersystem) aus und kann somit als Basiselastomer eines thermisch härtbaren Klebebandes verwendet werden. Da es vor der Aushärtung kurzfristig in einen hochviskos flüssigen Zustand übergeht, können spaltüberbrückende Eigenschaften (Gap-Filling-Eigenschaften) damit erzielt werden. Als Substrate kommen neben vielen anderen insbesondere geölte und ungeölte Stahlbleche in Frage, die verzinkt oder nicht verzinkt sein können. Weiterhin kommen Bleche anderer Metallsorten, wie zum Beispiel Aluminium in Frage sowie lackierte Bleche, insbesondere kataphoretisch tauchlackierte. Die Adhäsion ist dabei in der Regel so gut, dass es zu einem kohäsiven Bruch innerhalb des Klebebandes kommt. Das Niveau der Festigkeit ist über die Schwefelkonzentration in weiten Grenzen steuerbar und kann zwischen größer 0 N/mm$^2$ und ungefähr 30 N/mm$^2$ beliebig eingestellt werden.

Durch die Lösemittelfreiheit des erfindungsgemäßen Prepolymers können beliebig dicke Schichten desselben hergestellt werden, ohne dass es zu dabei einer störenden Blasenbildung kommt.

Für den Fall, dass das erfindungsgemäße Prepolymer als Basiselastomer zur Herstellung eines thermisch vulkanisierbaren Haftklebstoffs verwendet wird, können Epoxidharze als additive Komponente des erfindungsgemäßen Prepolymers besondere Vorteile bringen. Durch den Zusatz eines Epoxidharzes kann eine Verbesserung der Haftungseigenschaften, insbesondere auf geölten Blechen nach der thermischen Vulkanisationsreaktion erzielt werden.

Vorteilhafterweise erfolgt bereits die chemische Umsetzung zum hydroxyl-funktionalisierten Polybutadien-Polyurethan-Hotmelt-Prepolymer in Gegenwart eines oder mehrerer Epoxidharze. Der Vorteil dieses Verfahrens besteht darin, dass das mindestens eine Epoxidharz energiesparend bei Raumtemperatur eingearbeitet werden kann. Würde dagegen das hydroxyl-funktionalisierte Polybutadien-Polyurethan-Hotmelt-Prepolymer erst hergestellt und anschließend das Epoxidharz/die Epoxidharze zugegeben werden, müsste das Polybutadien-Polyurethan-Hotmelt-Prepolymer zunächst so hoch erhitzt werden, bis es als Schmelze vorliegt. Dies hätte den Nachteil, dass ein höherer Energieeintrag notwendig wäre. Für den Fall, dass das hydroxyl-funktionalisierte Polybutadien-Polyurethan-Hotmelt-Prepolymer als Basiselastomer zur Herstellung eines thermisch vulkanisierbaren Haftklebstoffs verwendet wird, hat die chemische Umsetzung zum hydroxyl-funktionalisierten Polybutadien-Polyurethan-Hotmelt-Prepolymer in Gegenwart eines oder mehrerer, insbesondere flüssiger Epoxidharze den weiteren Vorteil, dass die Erweichungs- beziehungsweise Schmelztemperatur des Gemisches aus Prepolymer und Epoxidharz deutlich niedriger als die Erweichungs- beziehungsweise Schmelztemperatur des reinen Prepolymers ist, wobei der Hotmeltcharakter dennoch erhalten bleibt. Eine spätere Compoundierung mit weiteren Stoffen, wie zum Beispiel Vulkanisationsstoffen, -hilfsmitteln und beschleunigern kann somit energiesparend und schonend bei niedrigeren Temperaturen erfolgen als ohne das bereits während der Prepolymer-Herstellung eingearbeitete Epoxidharz. Auf diese Weise ist auch eine Compoundierung mit sogenannten Ultrabeschleunigern, die bereits bei ungefähr 120°C innerhalb von wenigen Minuten die Vulkanisation anspringen lassen, möglich, ohne dass es zu unerwünschten Aushärtungen oder Vergelungen während des Compoundierprozesses kommt. Erfolgt die spätere Compoundierung des Polybutadien-Polyurethan-Hotmelt-Prepolymers mit Vulkanisationsstoffen, Vulkanisationsbeschleunigern und Vulkanisationshilfs- und zusatzstoffen in einem kontinuierlich arbeitendem Mischaggregat, insbesondere einem Compoundierextruder, ist ein weiterer Vorteil dadurch gegeben, dass keine der in der Regel begrenzt verfügbaren Dosierstellen am Compoundierextruder durch das zumindest eine Epoxidharz blockiert wäre.

Die Tatsache, dass es technisch möglich ist, die isocyanat-basierte chemische Umsetzung zum hydroxyl-funktionalisierten Polybutadien-Polyurethan-Hotmelt-Prepolymer in Gegenwart eines oder mehrerer Epoxidharze erfolgen zu lassen, ist für den Fachmann überraschend, denn Isocyanate sind in der Fachliteratur als reaktiv gegenüber Epoxiden beschrieben, so beispielsweise in Ullmann's Encyclopedia of Industrial Chemistry, 6th Edition, Vol. 12, Seite 271 (Tabelle) und in Encyclopedia of Polymer Science and Engineering, Vol. 6, S. 345.

Überraschend wurde zudem gefunden, dass Mischungen aus Epoxidharz und dem hydroxyl-funktionalisierten Polybutadien-Polyurethan-Hotmelt-Prepolymer zur Phasenseparierung neigen, wenn das Epoxidharz/ die Epoxidharze erst nach der Herstellung des hydroxyl-funktionalisierten Polybutadien-Polyurethan-Hotmelt-Prepolymers zugemischt werden. Erfolgt dagegen die chemische Umsetzung zum hydroxyl-funktionalisierten Polybutadien-Polyurethan-Hotmelt-Prepolymer in Gegenwart des zumindest einen Epoxidharzes, werden homogene Mischungen erhalten, die im Hinblick auf die Verwendung zur Herstellung eines thermisch vulkanisierbaren Haftklebstoffs den Vorteil haben, homogen zu vulkanisieren (auszuhärten), wodurch eine höhere Festigkeit und eine verbesserte Haftung erzielt werden als bei Verwendung einer inhomogenen Mischung aus Prepolymer und Epoxidharz.

In analoger Weise können auch andere Stoffe, wie zum Beispiel Weichmacher oder Bitumen oder auch Füllstoffe oder rheologische Additive vorteilhaft bereits vor oder während der chemischen Umsetzung zum hydroxyl-funktionalisierten Polybutadien-Polyurethan-Hotmelt-Prepolymer zugegeben werden.

Sofern Tackifier-Harze zugemischt werden, erfolgt dies bevorzugt erst während des Compoundierprozesses und nicht bereits vor oder während der chemischen Umsetzung zum hydroxyl-funktionalisierten Polybutadien-Polyurethan-Hotmelt-Prepolymer, weil sie, besonders wenn sie in hoher Konzentration zugemischt werden, die Viskosität des Prepolymers unvorteilhaft erhöhen, und somit die weiteren Verarbeitungsschritte bis zum Compoundierprozess, insbesondere das Pumpen und Fördern, erschweren.

Die vorliegende Erfindung betrifft darüber hinaus ein Klebeband, das auf einer Seite oder auf beiden Seiten zumindest teilweise mit dem erfindungsgemäßen Haftklebstoff beschichtet ist. Dabei kann es sich bei dem Klebeband auch um ein Transferklebeband handeln. Ein Klebeband ermöglicht eine besonders einfache und präzise Verklebung und ist daher besonders geeignet.

Der allgemeine Ausdruck "Klebeband" umfasst ein Trägermaterial, welches ein- oder beidseitig jeweils zumindest teilweise mit einem (Haft)klebstoff versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen. Dabei sind für verschiedene Anwendungen unterschiedlichste Träger wie zum Beispiel Folien, Gewebe, Vliese und Papiere mit den Klebstoffen kombinierbar. Des Weiteren umfasst der Ausdruck "Klebeband" auch so genannte "Transferklebebänder", das heißt ein Klebeband ohne Träger. Bei einem Transferklebeband ist der Klebstoff vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, der Klebstoff appliziert und dann der zweite Liner entfernt. Der Klebstoff kann so direkt zur Verbindung zweier Oberflächen verwendet werden.

Es sind aber auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Für bestimmte Anwendungen kann es gewünscht sein, dass eine Seite oder beide Seiten des Klebebandes nicht vollständig mit Klebstoff versehen ist bzw. sind, sondern teilweise klebstofffreie Bereiche vorgesehen sind, um z.B. Aussparungen in den zu beklebenden Oberflächen zu berücksichtigen.

Als Trägermaterial eines Klebebandes werden vorliegend bevorzugt Polymerfolien, Folienverbunde oder mit organischen und/oder anorganischen Schichten versehene Folien oder Folienverbunde eingesetzt, wobei Folien, insbesondere dimensionsstabile Kunststoff- oder Metallfolien, bevorzugt werden. Derartige Folien/Folienverbunde können aus allen gängigen zur Folienherstellung verwendeten Kunststoffen bestehen, beispielhaft aber nicht einschränkend erwähnt seien:

Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Polyesterfolien weisen den Vorteil auf, dass sie für Temperaturstabilität sorgen und eine erhöhte mechanische Stabilität einbringen. Ganz besonders bevorzugt besteht daher eine Trägerschicht in einem erfindungsgemäßen Liner aus einer Polyesterfolie, beispielsweise aus biaxial verstrecktem Polyethylenterephthalat.

Bei doppelseitig (selbst)klebenden Klebebändern können als obere und untere Schicht erfindungsgemäße Klebstoffe gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebstoffverankerung erzielt wird. Die Haftklebstoffschichten können optional mit Trennpapieren oder Trennfolien eingedeckt werden. Alternativ kann auch nur eine Klebstoffschicht mit einem doppelseitig trennenden Liner eingedeckt sein.

In einer Variante ist in dem doppelseitig (selbst)klebenden Klebeband ein erfindungsgemäßer Klebstoff vorgesehen sowie ein beliebiger weiterer, zum Beispiel ein solcher, der besonders gut auf einem Abdecksubstrat haftet oder eine besonders gute Repositionierbarkeit zeigt.

Die Dicke der Haftklebstoffschicht, die entweder als Transferklebeband oder auf einem flächigen Gebilde beschichtet vorliegt, beträgt bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m.

Für doppelseitige Klebebänder gilt für die Klebstoffe ebenfalls, dass die Dicke der einzelnen Haftklebstoffschicht(en) bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m liegt.

Bei der Herstellung eines erfindungsgemäßen Haftklebebandes erfolgt das Compoundieren und Beschichten des thermisch vulkanisierbaren Haftklebstoffs vorzugsweise lösemittelfrei und kontinuierlich. Dazu erfolgen Compoundieren und Beschichten bei erhöhten Temperaturen oberhalb von 30°C, vorzugsweise oberhalb von 40°C und besonders bevorzugt zwischen 50 und 100°C. Dazu erfolgt das Compoundieren bevorzugt in einem kontinuierlich arbeitenden Mischaggregat, insbesondere einem Compoundierextruder. Während des lösemittelfreien, kontinuierlichen Compoundierprozesses können dabei Vulkanisationsstoffe, Vulkanisationsbeschleuniger und Vulkanisationshilfs- und -zusatzstoffe zudosiert werden.

Klebebänder, die ein- oder beidseitig mit Klebstoffen beschichtet sind, werden am Ende des Herstellungsprozesses zumeist zu einer Rolle in Form einer archimedischen Spirale oder kreuzgespult aufgewickelt. Um bei doppelseitig klebenden Klebebändern zu verhindern, dass die Klebstoffe miteinander in Kontakt kommen, oder um bei einseitig klebenden Klebebändern eine Verklebung der Klebstoffe auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebstoffen (Transferklebeband) und Klebebandabschnitten (zum Beispiel Etiketten) eingesetzt.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:

Dynamisch Mechanische Analyse (DMA) zur Bestimmung des Speichermoduls G' und des Verlustmoduls G"

Zur Charakterisierung der hydroxyl- funktionalisierten Polybutadien-Polyurethan-Hotmelt-Prepolymere erfolgten Bestimmungen des Speichermoduls G' und des Verlustmoduls G" mittels Dynamisch Mechanischer Analyse (DMA). Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmoduls G" wurden im Frequenzsweep von $10^{-1}$ bis $10^2$ rad/sec bei einer Temperatur von 25 °C bestimmt. G' und G" sind folgendermaßen definiert:

G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).
G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).

Die Definition der Winkelfrequenz lautet: $\omega = 2\pi$ • f (f = Frequenz). Die Einheit ist rad/sec.
Die Dicke der gemessenen Proben betrug stets zwischen 0,9 und 1,1 mm (1 $\pm$ 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Dynamisch Mechanische Analyse (DMA) zur Bestimmung der komplexen Viskosität (n*)

Zur Charakterisierung der hydroxyl- funktionalisierten Polybutadien-Polyurethan-Hotmelt-Prepolymere erfolgten weiterhin Bestimmungen der komplexen Viskosität mittels Dynamisch Mechanischer Analyse (DMA). Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Die komplexe Viskosität wurde im Temperatursweep von -50 °C bis +250 °C bei einer Oszillationsfrequenz von 10 rad/s bestimmt. Die komplexe Viskosität $\eta^*$ ist folgendermaßen definiert: $\eta^* = G^* / \omega$
($G^*$ = komplexer Schubmodul, $\omega$ = Winkelfrequenz).

Die weiteren Definitionen lauten: $$G^* = \sqrt{(G')^2 + (G'')^2}$$

(G" = Viskositätsmodul (Verlustmodul), G' = Elastizitätsmodul (Speichermodul)).
G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).
G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).

$$\omega = 2\pi \cdot f \ (f = Frequenz).$$

Die Dicke der gemessenen Proben betrug stets zwischen 0,9 und 1,1 mm (1 $\pm$ 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Tack

Die Tackmessung (Messung der Oberflächenklebrigkeit) erfolgte nach der Stempelmessmethode in Anlehnung an ASTM D 2979-01 mit dem Texture Analyser TA 2 der Firma SMS (Stable Micro Systems) bei Raumtemperatur. Nach dieser Methode wird ein zylindrischer Stahlstempel mit definierter Andruckkraft und -geschwindigkeit auf die zu untersuchende Probe gedrückt und nach definierter Zeit mit definierter Geschwindigkeit wieder abgezogen. Das Prüfergebnis ist die zum Abziehen erforderliche maximale Kraft, angegeben in der Einheit N.
Die Prüfparameter waren im Einzelnen:

| | |
|---|---|
| Zylinderradius: | 1 mm => Zylinderfläche: 3,14 mm$^2$ |
| Andruckgeschwindigkeit: | 0,1 mm/s |
| Andruckkraft: | 5 N |
| Andruckzeit: | 0,01 s |
| Abzugsgeschwindigkeit: | 0,6 mm / s |

Die Dicke der gemessenen Proben betrug stets zwischen 0,9 und 1,1 mm (1 ± 0,1 mm).

Dynamischer Schertest (Zugscherfestigkeit)

Der dynamische Schertest erfolgte in Anlehnung an DIN EN 1465. Er erfolgte stets nach der thermischen Vulkanisation der verklebten Proben. Dazu wurde das erfindungsgemäße, hydroxyl-funktionalisierte Polybutadien-Polyurethan-Hotmelt-Prepolymer zunächst durch Compoundierung und Ausformung oder Beschichtung zu einer thermisch vulkanisierbaren Haftklebstoffschicht weiterverarbeitet. Die wesentlichen hinzu compoundierten Stoffe waren Schwefel und Vulkanisationsbeschleuniger. Weiterhin wurden in einzelnen Beispielen Epoxidverbindungen, Füllstoffe, Weichmacher sowie weitere Hils- und Zusatzstoffe hinzugemischt.

Aus den thermisch vulkanisierbaren Haftklebstoffschichten, die beidseitig jeweils mit einem Trennpapier abgedeckt waren, wurden rechteckige Stanzlinge mit den Maßen 25,0 mm x 12,5 mm ausgestanzt. Die Trennpapiere wurden daraufhin jeweils von einer Seite eines Stanzlings abgezogen. Die Dicke der Stanzlinge betrug stets zwischen 0,4 und 0,6 mm (0,5 ± 0,1 mm).

Die Stanzlinge wurden passgenau jeweils auf das Ende eines Prüfkörpers (Substrates) mit den Maßen 100,0 mm x 25,0 mm x 2,0 mm aufgelegt. Die Stanzlinge hafteten nun jeweils auf diesem Prüfkörper. Verwendet wurden Prüfkörper aus Stahl, elektrolytisch verzinktem Stahl, feuerverzinktem Stahl und kataphoretisch tauchlackiertem Stahl (KTL-Stahl). Die Bezeichnungen der nicht lackierten Stahlprüfkörper lauteten:

Stahl: DC04
Elektrolytisch verzinkter Stahl: DC01ZE 25/25
Feuerverzinkter Stahl: DX51 D+Z275

Lieferant aller genannten Prüfkörper war die Firma Rocholl GmbH.
Die nicht lackierten Prüfkörper wurden vor dem Auflegen der Stanzlinge zum Teil beölt. Das Öl hatte die Bezeichnung Anticorit RP 4107 S (Firma Fuchs) und wurde in einer Stärke von 2 bis 3 g/m$^2$ aufgetragen (siehe Tabelle). Anschließend wurde das noch auf den Stanzlingen verbliebene Trennpapier abgezogen.
Darauf wurden Prüfkörper aus dem jeweils gleichen Material jeweils bündig mit einem Ende so gelegt, dass wie in DIN EN 1465 beschrieben, jeweils ein überlappender Verbund resultierte. Die Überlappungslänge betrug jeweils 12,5 mm. Die Überlappungsfläche betrug jeweils 300 mm$^2$. Die überlappenden Verbunde wurden auf ein Blech gelegt, wobei durch Unterlegscheiben dafür Sorge getragen wurde, dass der obere Prüfkörper nicht kippen konnte. Auf den oberen Prüfkörper wurde im Bereich der Überlappungsfläche jeweils ein Gewicht von 2 kg gestellt. Der Verbund wurde dem Druck des Gewichtes 10 Sekunden jeweils bei Raumtemperatur ausgesetzt (Verpresszeit). Sodann wurde das Gewicht entfernt. Der Verbund wurde anschließend 10 Minuten oder 30 Minuten bei 140°C, 180°C oder bei 230°C vulkanisiert. Dabei kam es zu einer Härtungsreaktion innerhalb der Haftklebstoffschicht-Proben und zu einer sich aufbauenden starken Haftung zwischen den jeweiligen Haftklebstoffschicht-Proben und den jeweiligen Prüfkörpern. Es kam somit zu einer Verklebung mit einer erheblichen Festigkeitszunahme. Nach Abkühlung und einer Wartezeit von zwei bis drei Stunden erfolgte die Bestimmung der Zugscherfestigkeit.

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23°C und 50 % relativer Luftfeuchte durchgeführt.

Härtungstemperatur

Die Härtungstemperatur von reaktiven Klebstoffen wird kalorimetrisch über die Differential Scanning Calorimetry (DSC) nach DIN EN ISO 11357-3:2013-04 bestimmt. Aufheizkurven laufen mit einer Heizrate von 10 K/min. Die Muster werden in Al-Tiegeln mit gelochtem Deckel und Stickstoffatmosphäre vermessen. Eine chemische Reaktion ist als exothermer Peak im Thermogramm erkennbar. Als Aktivierungstemperatur wird diejenige Temperatur notiert, bei der die höchste Wärmetönung auftritt (Peaktemperatur).

Duchführung

Die haftklebrigen, hydroxyl-funktionalisierten Polybutadien-Polyurethan-Hotmelt-Prepolymere wurden in Laboransätzen in einem beheiz- und evakuierbaren 1 Liter-Planetenmischer der Firma PC-Laborsystem gefertigt. Sie wurden jeweils hergestellt, indem zunächst die Polybutadien-Polyole in die Mischdosen eingewogen und unter Vakuum bei einer Temperatur von 80 °C zwei Stunden lang gemischt und dabei entgast und somit von Restfeuchte befreit wurden. Sodann wurde der Kettenverlängerer zugegeben und 20 Minuten lang ohne Vakuum eingemischt. Anschließend wurden die restlichen Stoffe, wie zum Beispiel Katalyasator und/ oder Epoxidharz und/ oder Weichmacher und/ oder Bitumen entsprechend der in den einzelnen Beispielen angegebenen Mengenverhältnisse zugefügt und 20 Minuten eingemischt. Zuletzt erfolgte die Zugabe des mindestens einen aliphatischen oder alicyclischn Diisocyanats, das 30 Minuten lang bei einer Temperatur von ungefähr 80°C homogen eingemischt wurde. Die Mischdose wurde aus dem Mischer entfernt und die chemisch reagierende Mischung wurde in diesem Gefäß zur Vervollständigung der Umsetzung 7 Tage bei 23 °C stehengelassen. Zur Herstellung eines thermisch vulkanisierbaren Haftklebstoffs sowie einer thermisch vulkanisierbaren Haftklebstoffschicht erfolgte nach der einwöchigen Lagerzeit die Zumischung der weiteren Stoffe, wie insbesondere der Vulkanisationsstoffe, Vulkanisationsbeschleuniger und Vulkanisationshilfs- und zusatzstoffen sowie gegebenfalls der Füllstoffe, Weichmacher und sonstigen Stoffe zu den so hergestellten erfindungsgemäßen, haftklebrigen, hydroxyl-funktionalisierten Polybutadien-Polyurethan-Hotmelt-Prepolymeren bei 70°C bis 100°C im selben Gerät. Zur homogenen Einarbeitung der Stoffe wurden diese ungefähr 30 Minuten lang eingemischt. Zuletzt wurde ca. 10 Minuten lang Vakuum angelegt, um eingerührte Luft zu entfernen. Danach wurden aus den Mischungen Filme in der gewünschten Dicke durch Verpressen der Mischungen zwischen zwei mit silikonisierten Polyester-Folien abgedeckten Glasplatten bei ca. 80°C hergestellt. Nach der so erfolgten Ausformung wurden die Filme auf Raumtemperatur abgekühlt, wodurch sie sich sofort verfestigten.

Einige der haftklebrigen, hydroxyl-funktionalisierten Polybutadien-Polyurethan-Hotmelt-Prepolymere wurden in alternativer Weise in einem üblichen beheiz- und evakuierbaren 200 Liter-Mischkessel mit Dissolver-Rührwerk der Firma Molteni gefertigt. Sie wurden jeweils hergestellt, indem zunächst die Polybutadien-Polyole eingewogen und unter Vakuum bei einer Temperatur von 80 °C zwei Stunden lang gemischt wurden. Sodann wurde der Kettenverlängerer zugegeben und 20 Minuten lang ohne Vakuum eingemischt. Anschließend wurden die restlichen Stoffe, wie zum Beispiel Katalyasator und/ oder Epoxidharz und/ oder Weichmacher und/ oder Bitumen entsprechend der in den einzelnen Beispielen angegebenen Mengenverhältnisse zugefügt und 20 Minuten eingemischt. Zuletzt erfolgte die Zugabe des mindestens einen aliphatischen oder alicyclischn Diisocyanats, das 30 Minuten lang homogen eingemischt wurde. Die chemisch reagierenden Mischungen wurden in ein 200 Liter-Fass abgelassen und zur Vervollständigung der Umsetzung 7 Tage bei 23 °C stehengelassen.

Sofern im Einzelnen nicht anders beschrieben, wurden die so hergestellten erfindungsgemäßen, haftklebrigen, hydroxyl-funktionalisierten Polybutadien-Polyurethan-Hotmelt-Prepolymere zur Herstellung einer thermisch vulkanisierbaren Haftklebstoffschicht mit Hilfe einer Fassschmelzepumpe bei 70°C-100°C in einen Doppelschneckenextruder der Firma Krauss Maffei Berstorff, Bezeichnung Extruder ZE30Rx54D UTXmi, gepumpt. Der Extruder wurde von außen auf ca. 70 °C bis 100 °C elektrisch beheizt und über verschiedene Gebläse luftgekühlt. Er war so konzipiert, dass eine gute Durchmischung von Prepolymer und den weiteren Stoffen, wie insbesondere den Vulkanisationsstoffen, Vulkanisationsbeschleunigern und Vulkanisationshilfs- und zusatzstoffen sowie gegebenfalls den Füllstoffen bei kurzer Verweilzeit im Extruder gewährleistet war. Dazu wurden die Mischwellen des Doppelschneckenextruders so angeordnet, dass sich fördernde und mischende Elemente abwechselten. Die Zugabe der weiteren Stoffe erfolgte mit geeignetem Dosierequipment unter Verwendung von Dosierhilfsmitteln in die druckfreien Förderzonen des Doppelschneckenextruders.

Nach Austritt der ca. 70 °C bis 100 °C heißen Mischung aus dem Doppelschneckenextruder (Austritt: Runddüse 5 mm Durchmesser) erfolgte die Ausformung zum Film direkt mittels eines nachgeschalteten Zweiwalzenauftragswerks zwischen zwei zulaufenden, beidseitig silikonisierten 50 $\mu$m dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Der vorliegende Film wurde anschließend auf einen zylindrischen Kern aufgewickelt.

In Tabelle 1 sind die zur Herstellung des erfindungsgemäßen, haftklebrigen, schmelzbaren, hydroxyl-funktionalisierten Polybutadien-Polyurethan-Hotmelt-Prepolymers verwendeten Basismaterialien (Rohstoffe) aufgeführt, und zwar jeweils mit Handelsnamen, Hersteller und den für diese Erfindung relevanten technischen Daten.

In Tabelle 2 sind die für die daraus hergestellten thermisch vulkanisierbaren Haftklebstoffschichten zusätzlich verwendeten Basismaterialien (Rohstoffe) aufgeführt. Die genannten Rohstoffe sind alle frei im Handel erhältlich.

Tabelle 1:

| Handelsname | Beschreibung | mittlere zahlengemittelte Molmasse $M_n$ (g/mol) | OH bzw. NCO-Zahl (mmol OH/kg bzw. mmol NCO/kg | Mittlere, zahlengemittelte Funktionalitätf | Hersteller / Lieferant |
|---|---|---|---|---|---|
| **Polybutadien-Polyole** | | | | | |
| Krasol LBH 2000 ® | Polybutadien-Diol | 2100 | 910 | 1,9 | Cray Valley |
| Krasol LBH-P 2000 ® | Polybutadien-Diol, OH-Gruppen sind primär gebunden | 2100 | 910 | 1,9 | Cray Valley |
| Krasol LBH 3000 ® | Polybutadien-Diol | 3000 | 640 | 1,9 | Cray Valley |
| Poly bd R-45 HTLO ® | Polybutadien-Polyol, f größer 2 | 2800 | 840 | 2,4 | Cray Valley |
| **Polyether-Polyole** | | | | | |
| Voranol P 2000L ® | Polypropylenglykol, Diol | 2000 | 989 | 2,0 | Dow |
| **Polyester-Polyole** | | | | | |
| Desmophen 1652 ® | Polyester-Diol | l2120 | l941 | l2,0 | Bayer |
| **Kettenverlängerer** | | | | | |
| 2-Ethyl-1,3-hexandiol (EHD) | CAS-Nr.: 94-96-2, Diol | 146,2 | 13679,8 | 2,0 | Sigma-Aldrich |
| 2-Butyl-2-Ethyl-1,3-propandiol (BEPD) | CAS-Nr.: 115-84-4, Diol | 160,3 | 12476,6 | 2,0 | Perstorp |
| **Diisocyanate** | | | | | |
| Vestanat IPDI ® | Isophorondiisocyanat (IPDI), CAS-Nr.: 4098-71-9 | 222,3 | 8998 | 2,0 | Degussa |
| Desmodur W ® | Dicyclohexylmethandiiso-cyanat (HMDI), CAS-Nr.: 5124-30-1 | 262 | 7571 | 2,0 | Bayer |
| 4,4'-Methylen-bis-(phenylisocyanat) | MDI, CAS-Nr.: 101-68-8 | 250,25 | 7992 | 2,0 | Sigma-Aldrich |

(fortgesetzt)

| Katalysator | | | | | |
|---|---|---|---|---|---|
| Coscat 83 ® | Bismuttrisneodecanoat CAS-Nr.: 34364-26-6 | | | | Caschem |
| **Epoxidharze** | | | | | |
| Epikote 828 ® | Reaktionsprodukt aus Bisphenol-A und Epichlorhydrin CAS-Nr.: 25068-38-6 | | | | Brenntag |
| 3,4-Epoxycyclohexylmethyl-3',4'-epoxycyclohexancarboxylat | CAS-Nr.: 2386-87-0 | | | | Sigma-Aldrich |
| **Weichmacher** | | | | | |
| Palatinol N ® | Diisononylphthalat, CAS-Nr.: 28553-12-0 | | | | BASF |
| Benzoflex 9-88 SG Platizizer ® | Dipropylenglykoldibenzoat, CAS-Nr.: 27138-31-4 | | | | Eastman |
| Hexamoll ® DINCH ® | 1,2-Cyclohexandicarbonsäurediisononylester, CAS-Nr.: 166412-78-8 | | | | BASF |
| Citronensäuretriethyester | CAS-Nr.: 77-93-0 | | | | Sigma-Aldrich |
| Gravex 925 ® | Naphthenisches Fabrikationsöl | | | | Shell |
| **Bitumen** | | | | | |
| Azalt 50/70 DE ® | Straßenbaubitumen nach DIN EN 12591, Tabelle 1, Erweichungspunkt: 46-54°C | | | | Total |
| Zur Herstellung des erfindungsgemäßen, haftklebrigen, schmelzbaren, hydroxyl-funktionalisierten Polybutadien-Polyurethan-Hotmelt-Prepolymers sowie zur Herstellung der Vergleichsbeispiele verwendete Basismaterialien (Rohstoffe) | | | | | |

Tabelle 2:

| Handelsname | Beschreibung | Hersteller / Lieferant |
|---|---|---|
| **Vulkanisationsstoffe und -beschleuniger** | | |
| Mahlschwefel 80/90° | Löslicher Mahlschwefel, CAS-Nr.: 7704-34-9 | Avokal GmbH |
| MBTS | Di(benzothiazyl)disulfid, CAS-Nr.: 120-78-5 | Weber & Schaer GmbH |
| ZBEC | Zink-bis(dibenzyldithiocarbamat), CAS-Nr.: 14726-36-4 | Weber & Schaer GmbH |
| TBzTD | Tetrabenzylthiuramdisulfid, CAS-Nr.: 10591-85-2 | Weber & Schaer GmbH |
| **Ruße** | | |
| Luvomaxx N 220 ® | Perlruß | Lehmann & Voss |
| Printex 60 ® | Furnace-Ruß, Oil-Absorption-No: 118, BET-Oberfläche: 115 | Orion Engineered Carbons GmbH |
| **Füllstoffe** | | |
| Talkum Pharma M ® | Talkum, CAS-Nr.: 14807-96-6, spez. Oberfläche: 4,6 m$^2$/g | Scheruhn GmbH |
| Omyacarb 5-GU® | Gemahlene Kreide, mittlerer Teilchendurchmesser: 5,5 μm | Omya |
| Rapidquell® Quicklime CL 90-Q | Calciumoxid, Siebrückstand > 90 μm: 3 Masse-% | Rheinkalk GmbH |
| Zur Herstellung der thermisch vulkanisierbaren Haftklebstoffschichten aus den erfindungsgemäßen, haftklebrigen, schmelzbaren, hydroxyl-funktionalisierten Polybutadien-Polyurethan-Hotmelt-Prepolymeren verwendete Basismaterialien (Rohstoffe) | | |

**Beispiele**

**Beispiel 1**

Das erfindungsgemäße Polybutadien-Polyurethan-Hotmelt-Prepolymer (Prepolymer 1) setzt sich wie folgt zusammen:

Zusammensetzung Prepolymer 1:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 77,11 | 70,17 mmol OH | 50 |
| 2-Ethyl-1,3-hexandiol ® | 5,13 | 70,17 mmol OH | 50 |
| Coscat 83 ® | 0,15 | | |
| Desmodur W ® | 17,61 | 133,32 mmol NCO | |
| Summe | 100,00 | | |

Die Herstellung erfolgte im Laboransatz (1 Liter). Der Gewichtsanteil an Desmodur W® ist dabei so berechnet, dass das NCO/OH - Verhältnis des Prepolymers 0,95 beträgt. Der theoretische Gelpunkt errechnet sich zu 1,0.

Das Prepolymer 1 ist bei Raumtemperatur fest, schmelzbar und von der Konsistenz her gummiartig und haftklebrig. Die Prüfergebnisse sind in der folgenden Tabelle zusammengefasst.

Prüfergebnisse Prepolymer 1:

| | |
|---|---|
| G' (bei 1 rad /sec und 23 °C) | 200.000 Pa |
| G" (bei 1 rad /sec und 23 °C) | 150.000 Pa |
| G' (bei 10 rad /sec und 23 °C) | 400.000 Pa |
| G" (bei 10 rad /sec und 23 °C) | 230.000 Pa |
| Tack bei 23°C | 0,3 N |
| komplexe Viskosität $\eta^*$ bei 10 rad/sec und 23°C | 46.000 Pas |
| komplexe Viskosität $\eta^*$ bei 10 rad/sec und 90°C | 600 Pas |

Verwendung:

Prepolymer 1 wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt.

Zusammensetzung des thermisch vulanisierbaren Haftklebstoffs aus Prepolymer 1:

| Rohstoff | Gewichtsprozent |
|---|---|
| Prepolymer 1 | 87,0 |
| Mahlschwefel 80/90° | 8,7 |
| MBTS | 2,5 |
| ZBEC | 0,9 |
| TBzTD | 0,9 |

Es wurden die folgenden Zugscherfestigkeiten erzielt.

Prüfergebnisse des thermisch vulanisierbaren Haftklebstoffs aus Prepolymer 1:

| Prüfkörper | Ölauftrag | Aushärtung | Zugscherfestigkeit [MPa] | Bruchbild |
|---|---|---|---|---|
| Stahl/Stahl | nein | 30 min/ 180°C | 6,3 | kohäsiv |
| Stahl/ Stahl | ja | 30 min/ 180°C | 5,9 | kohäsiv |
| Elektrolytisch verzinkter Stahl/ Elekrolytisch verzinkter Stahl | ja | 30 min/ 180°C | 6,1 | teils kohäsiv/ teils adhäsiv |
| Feuerverzinkter Stahl/ Feuerverzinkter Stahl | ja | 30 min/ 180°C | 5,4 | teils kohäsiv/ teils adhäsiv |
| KTL-Stahl/ KTL-Stahl | nein | 30 min/ 140°C | 5,5 | kohäsiv |

**Beispiel 2**

Das erfindungsgemäße Polybutadien-Polyurethan-Hotmelt-Prepolymer (Prepolymer 2) setzt sich wie folgt zusammen:

Zusammensetzung Prepolymer 2:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 79,33 | 72,19 mmol OH | 50 |
| 2-Ethyl-1,3-hexandiol ® | 5,28 | 72,19 mmol OH | 50 |
| Coscat 83 ® | 0,15 | | |
| Vestanat IPDI ® | 15,24 | 137,16 mmol NCO | |
| Summe | 100,00 | | |

Die Herstellung erfolgte im Laboransatz (1 Liter). Der Gewichtsanteil an Vestanat IPDI ® ist dabei so berechnet, dass das NCO/OH - Verhältnis des Prepolymers 0,95 beträgt. Der theoretische Gelpunkt errechnet sich zu 1,0. Das Prepolymer 2 ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 2:

| | |
|---|---|
| G' (bei 1 rad /sec und 23 °C) | 170.000 Pa |
| G" (bei 1 rad /sec und 23 °C) | 130.000 Pa |
| G' (bei 10 rad /sec und 23 °C) | 320.000 Pa |
| G" (bei 10 rad /sec und 23 °C) | 200.000 Pa |
| Tack bei 23°C | 0,5 N |
| komplexe Viskosität $\eta$* bei 10 rad/sec und 23°C | 38.000 Pas |
| komplexe Viskosität $\eta$* bei 10 rad/sec und 90°C | 500 Pas |

Verwendung:

Prepolymer 2 wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt:

Zusammensetzung des thermisch vulanisierbaren Haftklebstoffs aus Prepolymer 2:

| Rohstoff | Gewichtsprozent |
|---|---|
| Prepolymer 2 | 87,0 |
| Mahlschwefel 80/90° | 8,7 |
| MBTS | 2,5 |
| ZBEC | 0,9 |
| TBzTD | 0,9 |

Es wurden die folgenden Zugscherfestigkeiten erzielt.

Prüfergebnisse des thermisch vulanisierbaren Haftklebstoffs aus Prepolymer 2:

| Prüfkörper | Ölauftrag | Aushärtung | Zugscherfestigkeit [MPa] | Bruchbild |
|---|---|---|---|---|
| Stahl/Stahl | nein | 30 min/ 180°C | 6,5 | kohäsiv |

(fortgesetzt)

| Prüfkörper | Ölauftrag | Aushärtung | Zugscherfestigkeit [MPa] | Bruchbild |
|---|---|---|---|---|
| Stahl/ Stahl | ja | 30 min/ 180°C | 6,3 | kohäsiv |
| Elektrolytisch verzinkter Stahl/ Elekrolytisch verzinkter Stahl | ja | 30 min/ 180°C | 6,2 | teils kohäsiv/ teils adhäsiv |
| Feuerverzinkter Stahl/ Feuerverzinkter Stahl | ja | 30 min/ 180°C | 5,1 | teils kohäsiv/ teils adhäsiv |
| KTL-Stahl/ KTL-Stahl | nein | 30 min/ 140°C | 5,6 | kohäsiv |

**Beispiel 3**

Das erfindungsgemäße Polybutadien-Polyurethan-Hotmelt-Prepolymer (Prepolymer 3) setzt sich wie folgt zusammen:

Zusammensetzung Prepolymer 3:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 76,69 | 69,78 mmol OH | 40 |
| 2-Ethyl-1,3-hexandiol ® | 7,65 | 104,68 mmol OH | 60 |
| Coscat 83 ® | 0,15 | | |
| Vestanat IPDI ® | 15,51 | 139,57 mmol NCO | |
| Summe | 100,00 | | |

Die Herstellung erfolgte im Laboransatz (1 Liter). Der Gewichtsanteil an Vestanat IPDI ® ist dabei so berechnet, dass das NCO/OH - Verhältnis des Prepolymers 0,80 beträgt. Der theoretische Gelpunkt errechnet sich zu 1,0. Das Prepolymer 3 ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 3:

| | |
|---|---|
| G' (bei 1 rad /sec und 23 °C) | 80.000 Pa |
| G" (bei 1 rad /sec und 23 °C) | 70.000 Pa |
| G' (bei 10 rad /sec und 23 °C) | 130.000 Pa |
| G" (bei 10 rad /sec und 23 °C) | 120.000 Pa |
| Tack bei 23°C | 0,6 N |
| komplexe Viskosität $\eta *$ bei 10 rad/sec und 23°C | 18.000 Pas |
| komplexe Viskosität $\eta *$ bei 10 rad/sec und 90°C | 400 Pas |

Verwendung:

Prepolymer 3 wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt:

Zusammensetzung des thermisch vulanisierbaren Haftklebstoffs aus Prepolymer 3:

| Rohstoff | Gewichtsprozent |
| --- | --- |
| Prepolymer 3 | 87,0 |
| Mahlschwefel 80/90° | 8,7 |
| MBTS | 2,5 |
| ZBEC | 0,9 |
| TBzTD | 0,9 |

Es wurden die folgenden Zugscherfestigkeiten erzielt.

Prüfergebnisse des thermisch vulanisierbaren Haftklebstoffs aus Prepolymer 3:

| Prüfkörper | Ölauftrag | Aushärtung | Zugscherfestigkeit [MPa] | Bruchbild |
| --- | --- | --- | --- | --- |
| Stahl/Stahl | nein | 30 min/ 180°C | 6,9 | kohäsiv |
| Stahl/ Stahl | ja | 30 min/ 180°C | 6,2 | kohäsiv |
| Elektrolytisch verzinkter Stahl/ Elekrolytisch verzinkter Stahl | ja | 30 min/ 180°C | 6,2 | teils kohäsiv/ teils adhäsiv |
| Feuerverzinkter Stahl/ Feuerverzinkter Stahl | ja | 30 min/ 180°C | 6,5 | teils kohäsiv/ teils adhäsiv |
| KTL-Stahl/ KTL-Stahl | nein | 30 min/ 140°C | 6,1 | kohäsiv |

**Beispiel 4**

Die chemische Umsetzung zum erfindungsgemäßen Polybutadien-Polyurethan-Hotmelt-Prepolymer erfolgte in Gegenwart eines Epoxidharzes. Das erfindungsgemäße Polybutadien-Polyurethan-Hotmelt-Prepolymer (Prepolymer 4) setzt sich inklusive des Epoxidharzes wie folgt zusammen:

Zusammensetzung Prepolymer 4 inklusive Epoxidharz:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
| --- | --- | --- | --- |
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| DesmodurW ® | 14,08 | 106,62 mmol NCO | |
| Epikote 828 ® | 20,00 | | |
| Summe | 100,00 | | |

Die Herstellung erfolgte im 200 Liter Mischkessel. Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 4 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 4 (inklusive Epoxidharz):

| | |
|---|---|
| G' (bei 1 rad /sec und 23 °C) | 9.000 Pa |
| G" (bei 1 rad /sec und 23 °C) | 20.000 Pa |
| G' (bei 10 rad /sec und 23 °C) | 70.000 Pa |
| G" (bei 10 rad /sec und 23 °C) | 90.000 Pa |
| Tack bei 23°C | 0,7 N |
| komplexe Viskosität $\eta^*$ bei 10 rad/sec und 23°C | 11.000 Pas |
| komplexe Viskosität $\eta^*$ bei 10 rad/sec und 90°C | 200 Pas |

Verwendung 1:

Prepolymer 4 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Doppelschneckenextruder (DSE) weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer 4:

| Rohstoff | Gewichtsprozent |
|---|---|
| Prepolymer 4 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Luvomaxx N220 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 4:

| Prüfkörper | Ölauftrag | Aushärtung | Zugscherfestigkeit [MPa] | Bruchbild |
|---|---|---|---|---|
| Stahl/Stahl | nein | 30 min/ 180°C | 10,3 | kohäsiv |
| Stahl/ Stahl | ja | 30 min/ 180°C | 9,8 | kohäsiv |
| Stahl/ Stahl | ja | 10 min/ 230°C | 9,4 | kohäsiv |
| Elektrolytisch verzinkter Stahl/ Elekrolytisch verzinkter Stahl | ja | 30 min/ 180°C | 9,1 | kohäsiv |
| Feuerverzinkter Stahl/ Feuerverzinkter Stahl | ja | 30 min/ 180°C | 8,4 | kohäsiv |
| KTL-Stahl/ KTL-Stahl | nein | 30 min/ 140°C | 8,7 | kohäsiv |

Verwendung 2:

Prepolymer 4 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Doppelschneckenextruder (DSE) Extruder weiter abgemischt. Die Schmelzetemperatur wurde auf ca. 100 °C gehalten.

Das bereits während der Prepolymerherstellung eingemischte Epoxidharz ist in der folgenden Tabelle separat aufgeführt.

Zusammensetzung der thermisch vulanisierbaren Klebebandschicht:

| Rohstoff | Gewichtsprozent |
|---|---|
| Prepolymer 4 (exklusive Epoxidharz) | 44,8 |
| Epikote 828 ® (aus der PBD-PU 3-Herstellung) | 11,3 |
| Mahlschwefel 80/90° | 3,5 |
| ZBEC | 3,0 |
| TBzTD | 3,0 |
| Luvomaxx N220 ® | 0,9 |
| Omyacarb 5-GU® | 26,1 |
| Rapidquell® Quicklime CL 90-Q | 3,5 |
| Talkum Pharma M ® | 3,9 |

Die Härtungstemperatur der Klebemasse konnte durch den sehr hohen Gehalt an Ultrabeschleunigern unter den für übliche Vulkanisationsklebstoffe bekannten Bereich von 130 - 250 °C eingestellt werden und betrug 120 °C.
Beim hier vorliegenden hohen Gehalt an Ultrabeschleunigern und der dementsprechend niedrigen Härtungstemperatur zeigten sich im DSE erste Vernetzungserscheinungen (Stippen, Gelbildung).

Verwendung 3:

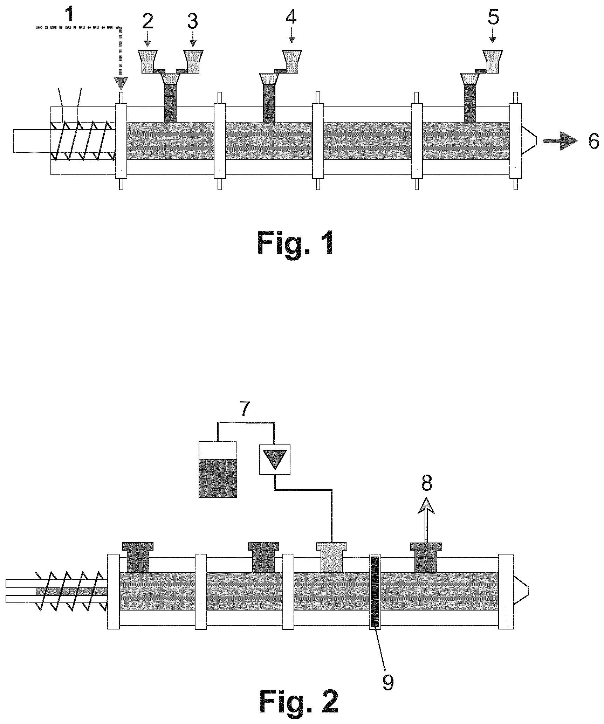

Zur weiteren Absenkung der Compoundiertemperatur wurde Prepolymer 4 (inklusive Epoxidharz) zur Herstellung eines thermisch vulkanisierbaren Haftklebstoffs beziehungsweise einer thermisch vulkanisierbaren Haftklebstoffschicht verwendet und dazu gemäß der obenstehenden Rezeptur für Verwendung 2 im Planetwalzenextruder (PWE) weiter abgemischt.
Ziel war eine Absenkung der Prozesstemperatur, um eine die Gefahr einer vorzeitigen Vernetzung insbesondere bei erhöhten Ultrabeschleunigeranteilen abzumindern.
Im PWE wurden die pulverförmigen Feststoffe wie Talkum, Kreide, Kalk (Calciumoxid), Schwefel und ein Ultrabeschleuniger-Premix rezepturabhängig in die PU-Basis eingearbeitet. Die flüssige Rußdispersion wurde in einem nachgeschalteten DSE eingebracht, in dem auch eine Entgasung vorgenommen wurde.
Das Prepolymer wurde dabei über eine Fassschmelze und Zwangseinspeisung in den Extruder (Typ Entex PWE, vierschüssig, Durchmesser 70 mm, bestückt mit Standardspindeln: 7, 7, 7, 6 je Schuss) eingespeist (T ca. 70°C). Der Durchsatz betrug ca. 25 kg/h, die Drehzahl 70 1/min). Es zeigte sich, dass die verringerte Spindelbestückung des letzten Schusses für eine geringe Prozesstemperatur vorteilhaft ist.
Um die Dosiererkomplexität zu reduzieren, wurden Premixe für Talkum und Kalk sowie für die Ultrabeschleuniger ZBEC und TBzTD angefertigt. Lediglich Kreide und Schwefel wurden separat dosiert. Fig. 1 zeigt den Aufbau.
Die vier Walzenzylinder wurden auf 70/50/35/35°C abfallend und die Zentralspindel auf 20°C temperiert. Die Schmelzetemperatur unmittelbar hinter dem PWE wurde mit 72°C bestimmt.
Über eine mit 75°C temperierte Schmelzepumpe und nachfolgenden Schmelzeschlauch wurde das Compound in den DSE überführt. Bei einer Drehzahl von 110 1/min wurden die Einzelzonen auf 60°C vorgewählt. Der Niederhalter im Entgasungsbereich lief mit 250 1/min. Die Austrittstemperatur betrug etwa 77°C. Fig. 2 zeigt diesen Anlagenteil schematisch.
Es konnten die Temperaturen in PWE und nachgeschaltetem DSE unterhalb von 80 °C gehalten werden, so dass keine Stippenbildung / Gel auftrat.
Verwendungen 2 und 3 des Prepolymers 4 zweigen, dass der Planetwalzenenextruder das bevorzugte Gerät zur Compoundierung von thermisch härtbaren Klebemassen darstellt, deren Härtungstemperatur unterhalb von 130 °C liegt, da die Härtungsreaktion durch die mit diesem Aggregat niedrigen Temperaturen bei der Herstellung von Klebemasse und Klebeband auch bei einem sehr hohen Gehalt an Härtungsagenzien und dementsprechend niedriger Härtungstemperatur nicht anspringt.

**Beispiel 5**

Die chemische Umsetzung zum erfindungsgemäßen Polybutadien-Polyurethan-Hotmelt-Prepolymer erfolgte in Gegenwart eines Weichmachers. Das erfindungsgemäße Polybutadien-Polyurethan-Hotmelt-Prepolymer (Prepolymer 5) setzt sich inklusive des Weichmachers wie folgt zusammen:

Zusammensetzung Prepolymer 5 inklusive Weichmacher:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Palatinol N ® | 20,00 | | |
| Summe | 100,00 | | |

Die Herstellung erfolgte im 200 Liter Mischkessel. Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 5 (inklusive Weichmacher) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 5 (inklusive Weichmacher):

| | |
|---|---|
| G' (bei 1 rad /sec und 23 °C) | 1.000 Pa |
| G" (bei 1 rad /sec und 23 °C) | 4.300 Pa |
| G' (bei 10 rad /sec und 23 °C) | 15.000 Pa |
| G" (bei 10 rad /sec und 23 °C) | 30.000 Pa |
| Tack bei 23°C | 0,5 N |
| komplexe Viskosität $\eta$* bei 10 rad/sec und 23°C | 3.300 Pas |
| komplexe Viskosität $\eta$* bei 10 rad/sec und 90°C | 100 Pas |

Verwendung:

Prepolymer 5 (inklusive Weichmacher) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Doppelschneckenextruder weiter abgemischt. Der bereits während der Prepolymerherstellung eingemischte Weichmacher ist in der folgenden Tabelle separat aufgeführt.

Zusammensetzung des thermisch vulanisierbaren Haftklebstoffs aus Prepolymer 5:

| Rohstoff | Gewichtsprozent |
|---|---|
| Prepolymer 5 (exklusive Weichmacher) | 51,9 |
| Palatinol N ® (aus der Prepolymerherstellung) | 13,0 |
| Mahlschwefel 80/90° | 6,9 |
| MBTS | 2,1 |
| ZBEC | 0,9 |

(fortgesetzt)

| Rohstoff | Gewichtsprozent |
|---|---|
| TBzTD | 0,9 |
| Luvomaxx N220 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 5:

| Prüfkörper | Ölauftrag | Aushärtung | Zugscherfestigkeit [MPa] | Bruchbild |
|---|---|---|---|---|
| Stahl/Stahl | nein | 30 min/ 180°C | 11,7 | kohäsiv |
| Stahl/ Stahl | ja | 30 min/ 180°C | 9,2 | teils kohäsiv/ teils adhäsiv |
| Stahl/ Stahl | ja | 10 min/ 230°C | 7,3 | teils kohäsiv/ teils adhäsiv |
| Elektrolytisch verzinkter Stahl/ Elekrolytisch verzinkter Stahl | ja | 30 min/ 180°C | 6,2 | teils kohäsiv/ teils adhäsiv |
| Feuerverzinkter Stahl/ Feuerverzinkter Stahl | ja | 30 min/ 180°C | 5,8 | teils kohäsiv/ teils adhäsiv |
| KTL-Stahl/ KTL-Stahl | nein | 30 min/ 140°C | 9,9 | kohäsiv |

**Beispiel 6**

Die chemische Umsetzung zum erfindungsgemäßen Polybutadien-Polyurethan-Hotmelt-Prepolymer erfolgte in Gegenwart eines Weichmachers. Das erfindungsgemäße Polybutadien-Polyurethan-Hotmelt-Prepolymer (Prepolymer 6) setzt sich inklusive des Weichmachers wie folgt zusammen:

Zusammensetzung Prepolymer 6 inklusive Weichmacher:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Benzoflex 9-88 SG Platizizer ® | 20,00 | | |

(fortgesetzt)

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 6 (inklusive Weichmacher) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 6 (inklusive Weichmacher):

| | |
|---|---|
| G' (bei 1 rad /sec und 23 °C) | 2.000 Pa |
| G" (bei 1 rad /sec und 23 °C) | 5.700 Pa |
| G' (bei 10 rad /sec und 23 °C) | 20.000 Pa |
| G" (bei 10 rad /sec und 23 °C) | 40.000 Pa |
| Tack bei 23°C | 0,6 N |
| komplexe Viskosität $\eta$ * bei 10 rad/sec und 23°C | 4.400 Pas |
| komplexe Viskosität $\eta$ * bei 10 rad/sec und 90°C | 150 Pas |

Verwendung:

Prepolymer 6 (inklusive Weichmacher) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Der bereits während der Prepolymerherstellung eingemischte Weichmacher ist in der folgenden Tabelle separat aufgeführt.

Zusammensetzung des thermisch vulanisierbaren Haftklebstoffs aus Prepolymer 6:

| Rohstoff | Gewichtsprozent |
|---|---|
| Prepolymer 6 (exklusive Weichmacher) | 51,9 |
| Benzoflex9-88 SG Platizizer® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 6:

| Prüfkörper | Ölauftrag | Aushärtung | Zugscherfestigkeit [MPa] | Bruchbild |
|---|---|---|---|---|
| Stahl/Stahl | nein | 30 min/ 180°C | 9,8 | kohäsiv |

(fortgesetzt)

| Prüfkörper | Ölauftrag | Aushärtung | Zugscherfestigkeit [MPa] | Bruchbild |
|---|---|---|---|---|
| Stahl/ Stahl | ja | 30 min/ 180°C | 8,0 | teils kohäsiv/ teils adhäsiv |
| Stahl/ Stahl | ja | 10 min/ 230°C | 8,1 | teils kohäsiv/ teils adhäsiv |
| Elektrolytisch verzinkter Stahl/ Elekrolytisch verzinkter Stahl | ja | 30 min/ 180°C | 6,4 | teils kohäsiv/ teils adhäsiv |
| Feuerverzinkter Stahl/ Feuerverzinkter Stahl | ja | 30 min/ 180°C | 6,1 | teils kohäsiv/ teils adhäsiv |
| KTL-Stahl/ KTL-Stahl | nein | 30 min/ 140°C | 8,4 | kohäsiv |

**Beispiel 7**

Die chemische Umsetzung zum erfindungsgemäßen Polybutadien-Polyurethan-Hotmelt-Prepolymer erfolgte in Gegenwart eines Weichmachers. Das erfindungsgemäße Polybutadien-Polyurethan-Hotmelt-Prepolymer (Prepolymer 7) setzt sich inklusive des Weichmachers wie folgt zusammen:

Zusammensetzung Prepolymer 7 inklusive Weichmacher:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| DesmodurW ® | 14,08 | 106,62 mmol NCO | |
| Hexamoll ® DINCH ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0.
Das Prepolymer 7 (inklusive Weichmacher) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 7 (inklusive Weichmacher):

| | |
|---|---|
| G' (bei 1 rad /sec und 23 °C) | 1.500 Pa |
| G" (bei 1 rad /sec und 23 °C) | 5.200 Pa |

(fortgesetzt)

| | |
|---|---|
| G' (bei 10 rad /sec und 23 °C) | 18.000 Pa |
| G" (bei 10 rad /sec und 23 °C) | 35.000 Pa |
| Tack bei 23°C | 0,7 N |
| komplexe Viskosität $\eta$* bei 10 rad/sec und 23°C | 3.900 Pas |
| komplexe Viskosität $\eta$* bei 10 rad/sec und 90°C | 120 Pas |

Verwendung:

Prepolymer 7 (inklusive Weichmacher) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Der bereits während der Prepolymerherstellung eingemischte Weichmacher ist in der folgenden Tabelle separat aufgeführt.

Zusammensetzung des thermisch vulanisierbaren Haftklebstoffs aus Prepolymer 7:

| Rohstoff | Gewichtsprozent |
|---|---|
| Prepolymer 7 (exklusive Weichmacher) | 51,9 |
| Hexamoll ® DINCH ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 7:

| Prüfkörper | Ölauftrag | Aushärtung | Zugscherfestigkeit [MPa] | Bruchbild |
|---|---|---|---|---|
| Stahl/Stahl | nein | 30 min/ 180°C | 10,4 | kohäsiv |
| Stahl/ Stahl | ja | 30 min/ 180°C | 7,1 | teils kohäsiv/ teils adhäsiv |
| Stahl/ Stahl | ja | 10 min/ 230°C | 6,4 | teils kohäsiv/ teils adhäsiv |
| Elektrolytisch verzinkter Stahl/ Elekrolytisch verzinkter Stahl | ja | 30 min/ 180°C | 5,2 | teils kohäsiv/ teils adhäsiv |
| Feuerverzinkter Stahl/ Feuerverzinkter Stahl | ja | 30 min/ 180°C | 5,0 | teils kohäsiv/ teils adhäsiv |

(fortgesetzt)

| Prüfkörper | Ölauftrag | Aushärtung | Zugscherfestigkeit [MPa] | Bruchbild |
|---|---|---|---|---|
| KTL-Stahl/ KTL-Stahl | nein | 30 min/ 140°C | 9,6 | kohäsiv |

**Beispiel 8**

Die chemische Umsetzung zum erfindungsgemäßen Polybutadien-Polyurethan-Hotmelt-Prepolymer erfolgte in Gegenwart eines Weichmachers. Das erfindungsgemäße Polybutadien-Polyurethan-Hotmelt-Prepolymer (Prepolymer 8) setzt sich inklusive des Weichmachers wie folgt zusammen:

Zusammensetzung Prepolymer 8 inklusive Weichmacher:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Citronensäuretriethyester | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0.

Das Prepolymer 8 (inklusive Weichmacher) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 8 (inklusive Weichmacher):

| | |
|---|---|
| G' (bei 1 rad /sec und 23 °C) | 3.000 Pa |
| G" (bei 1 rad /sec und 23 °C) | 7.500 Pa |
| G' (bei 10 rad /sec und 23 °C) | 25.000 Pa |
| G" (bei 10 rad /sec und 23 °C) | 45.000 Pa |
| Tack bei 23°C | 0,8 N |
| komplexe Viskosität $\eta$ * bei 10 rad/sec und 23°C | 5.100 Pas |
| komplexe Viskosität $\eta$ * bei 10 rad/sec und 90°C | 150 Pas |

Verwendung:

Prepolymer 8 (inklusive Weichmacher) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Der bereits während der Prepolymerherstellung eingemischte Weichmacher ist in der folgenden Tabelle separat aufgeführt.

Zusammensetzung des thermisch vulanisierbaren Haftklebstoffs aus Prepolymer 8:

| Rohstoff | Gewichtsprozent |
|---|---|
| Prepolymer 8 (exklusive Weichmacher) | 51,9 |

(fortgesetzt)

| Rohstoff | Gewichtsprozent |
|---|---|
| Citronensäuretriethyester (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 8:

| Prüfkörper | Ölauftrag | Aushärtung | Zugscherfestigkeit [MPa] | Bruchbild |
|---|---|---|---|---|
| Stahl/Stahl | nein | 30 min/ 180°C | 9,0 | kohäsiv |
| Stahl/ Stahl | ja | 30 min/ 180°C | 5,1 | teils kohäsiv/ teils adhäsiv |
| Stahl/ Stahl | ja | 10 min/ 230°C | 5,2 | teils kohäsiv/ teils adhäsiv |
| Elektrolytisch verzinkter Stahl/ Elekrolytisch verzinkter Stahl | ja | 30 min/ 180°C | 4,6 | teils kohäsiv/ teils adhäsiv |
| Feuerverzinkter Stahl/ Feuerverzinkter Stahl | ja | 30 min/ 180°C | 4,1 | teils kohäsiv/ teils adhäsiv |
| KTL-Stahl/ KTL-Stahl | nein | 30 min/ 140°C | 8,3 | kohäsiv |

**Beispiel 9**

Die chemische Umsetzung zum erfindungsgemäßen Polybutadien-Polyurethan-Hotmelt-Prepolymer erfolgte in Gegenwart eines Weichmachers. Das erfindungsgemäße Polybutadien-Polyurethan-Hotmelt-Prepolymer (Prepolymer 9) setzt sich inklusive des Weichmachers wie folgt zusammen:

Zusammensetzung Prepolymer 9 inklusive Weichmacher:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3- hexandiol ® | 4,10 | 56,12 mmol OH | 50 |

(fortgesetzt)

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Coscat 83 ® | 0,15 | | |
| Desmodur W ® | 14,08 | 106,62 mmol NCO | |
| Gravex 925 ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 9 (inklusive Weichmacher) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 9 (inklusive Weichmacher):

| | |
|---|---|
| G' (bei 1 rad /sec und 23 °C) | 5.000 Pa |
| G" (bei 1 rad /sec und 23 °C) | 11.000 Pa |
| G' (bei 10 rad /sec und 23 °C) | 35.000 Pa |
| G" (bei 10 rad /sec und 23 °C) | 60.000 Pa |
| Tack bei 23°C | 0,9 N |
| komplexe Viskosität $\eta$* bei 10 rad/sec und 23°C | 6.900 Pas |
| komplexe Viskosität $\eta$* bei 10 rad/sec und 90°C | 180 Pas |

Verwendung:

Prepolymer 9 (inklusive Weichmacher) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Der bereits während der Prepolymerherstellung eingemischte Weichmacher ist in der folgenden Tabelle separat aufgeführt.

Zusammensetzung des thermisch vulanisierbaren Haftklebstoffs aus Prepolymer 9:

| Rohstoff | Gewichtsprozent |
|---|---|
| Prepolymer 9 (exklusive Weichmacher) | 51,9 |
| Gravex 925 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 9:

| Prüfkörper | Ölauftrag | Aushärtung | Zugscherfestigkeit [MPa] | Bruchbild |
|---|---|---|---|---|
| Stahl/Stahl | nein | 30 min/ 180°C | 8,2 | kohäsiv |
| Stahl/ Stahl | ja | 30 min/ 180°C | 7,9 | kohäsiv |
| Stahl/ Stahl | ja | 10 min/ 230°C | 7,1 | kohäsiv |
| Elektrolytisch verzinkter Stahl/ Elekrolytisch verzinkter Stahl | ja | 30 min/ 180°C | 6,0 | teils kohäsiv/ teils adhäsiv |
| Feuerverzinkter Stahl/ Feuerverzinkter Stahl | ja | 30 min/ 180°C | 5,4 | teils kohäsiv/ teils adhäsiv |
| KTL-Stahl/ KTL-Stahl | nein | 30 min/ 140°C | 8,0 | kohäsiv |

**Beispiel 10**

Die chemische Umsetzung zum erfindungsgemäßen Polybutadien-Polyurethan-Hotmelt-Prepolymer erfolgte in Gegenwart eines Weichmachers und Bitumen. Das erfindungsgemäße Polybutadien-Polyurethan-Hotmelt-Prepolymer (Prepolymer 10) setzt sich inklusive des Weichmachers und des Bitumens wie folgt zusammen:

Zusammensetzung Prepolymer 10 inklusive Weichmacher und Bitumen:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 57,80 | 52,6 mmol OH | 50 |
| 2-Ethyl-1,3-hexandiol ® | 3,85 | 52,6 mmol OH | 50 |
| Coscat 83 ® | 0,15 | | |
| Desmodur W ® | 13,20 | 99,94 mmol NCO | |
| Gravex 925 ® | 15,00 | | |
| Azalt 50/70 DE ® | 10,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 10 (inklusive Weichmacher und Bitumen) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 10 (inklusive Weichmacher und Bitumen):

| | |
|---|---|
| G' (bei 1 rad /sec und 23 °C) | 13.000 Pa |
| G" (bei 1 rad /sec und 23 °C) | 30.000 Pa |
| G' (bei 10 rad /sec und 23 °C) | 100.000 Pa |

(fortgesetzt)

| | |
|---|---|
| G" (bei 10 rad /sec und 23 °C) | 140.000 Pa |
| Tack bei 23°C | 1,3 N |
| komplexe Viskosität $\eta$ * bei 10 rad/sec und 23°C | 17.000 Pas |
| komplexe Viskosität $\eta$ * bei 10 rad/sec und 90°C | 380 Pas |

Verwendung:

Prepolymer 10 (inklusive Weichmacher) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Der bereits während der Prepolymerherstellung eingemischte Weichmacher und das bereits eingemischte Bitumen sind in der folgenden Tabelle separat aufgeführt.

Zusammensetzung des thermisch vulanisierbaren Haftklebstoffs aus Prepolymer 10:

| Rohstoff | Gewichtsprozent |
|---|---|
| Prepolymer 10 (exklusive Weichmacher und Bitumen) | 49,81 |
| Gravex 925 ® (aus der Prepolymerherstellung) | 9,95 |
| Azalt 50/70 DE ® (aus der Prepolymerherstellung) | 6,64 |
| Mahlschwefel 80/90° | 6,60 |
| MBTS | 2,00 |
| ZBEC | 0,90 |
| TBzTD | 0,90 |
| Printex 60 ® | 8,40 |
| Talkum Pharma M ® | 14,80 |

Es wurden die folgenden Zugscherfestigkeiten erzielt.

Prüfergebnisse des thermisch vulanisierbaren Haftklebstoffs aus Prepolymer 10:

| Prüfkörper | Ölauftrag | Aushärtung | Zugscherfestigkeit [MPa] | Bruchbild |
|---|---|---|---|---|
| Stahl/Stahl | nein | 30 min/ 180°C | 9,2 | kohäsiv |
| Stahl/ Stahl | ja | 30 min/ 180°C | 8,5 | kohäsiv |
| Stahl/ Stahl | ja | 10 min/ 230°C | 9,0 | kohäsiv |
| Elektrolytisch verzinkter Stahl/ Elekrolytisch verzinkter Stahl | ja | 30 min/ 180°C | 9,7 | kohäsiv |
| Feuerverzinkter Stahl/ Feuerverzinkter Stahl | ja | 30 min/ 180°C | 7,3 | teils kohäsiv/ teils adhäsiv |
| KTL-Stahl/ KTL-Stahl | nein | 30 min/ 140°C | 10,0 | kohäsiv |

**Beispiel 11**

Die chemische Umsetzung zum erfindungsgemäßen Polybutadien-Polyurethan-Hotmelt-Prepolymer erfolgte in Gegenwart eines Epoxidharzes. Das erfindungsgemäße Polybutadien-Polyurethan-Hotmelt-Prepolymer (Prepolymer 11) setzt sich inklusive des Epoxidharzes wie folgt zusammen:

Zusammensetzung Prepolymer 11 inklusive Epoxidharz:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH-P 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Epikote 828 ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 11 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnis Prepolymer 11 (inklusive Epoxidharz):

| | |
|---|---|
| G' (bei 1 rad /sec und 23 °C) | 12.000 Pa |
| G" (bei 1 rad /sec und 23 °C) | 25.000 Pa |
| G' (bei 10 rad /sec und 23 °C) | 90.000 Pa |
| G" (bei 10 rad /sec und 23 °C) | 120.000 Pa |
| Tack bei 23°C | 0,8 N |
| komplexe Viskosität $\eta$* bei 10 rad/sec und 23°C | 15.000 Pas |
| komplexe Viskosität $\eta$* bei 10 rad/sec und 90°C | 300 Pas |

Verwendung:

Prepolymer 11 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer 11:

| Rohstoff | Gewichtsprozent |
|---|---|
| Prepolymer 11 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |

(fortgesetzt)

| Rohstoff | Gewichtsprozent |
|---|---|
| Talkum Pharma M ® | 15,5 |

Es wurden die folgenden Zugscherfestigkeiten erzielt.

Prüfergebnisse des thermisch vulanisierbaren Haftklebstoffs aus Prepolymer 11:

| Prüfkörper | Ölauftrag | Aushärtung | Zugscherfestigkeit [MPa] | Bruchbild |
|---|---|---|---|---|
| Stahl/Stahl | nein | 30 min/ 180°C | 9,8 | kohäsiv |
| Stahl/ Stahl | ja | 30 min/ 180°C | 9,9 | kohäsiv |
| Stahl/ Stahl | ja | 10 min/ 230°C | 9,7 | kohäsiv |
| Elektrolytisch verzinkter Stahl/ Elekrolytisch verzinkter Stahl | ja | 30 min/ 180°C | 9,9 | kohäsiv |
| Feuerverzinkter Stahl/ Feuerverzinkter Stahl | ja | 30 min/ 180°C | 9,7 | kohäsiv |
| KTL-Stahl/ KTL-Stahl | nein | 30 min/ 140°C | 10,2 | kohäsiv |

**Beispiel 12**

Die chemische Umsetzung zum erfindungsgemäßen Polybutadien-Polyurethan-Hotmelt-Prepolymer erfolgte in Gegenwart eines Epoxidharzes. Das erfindungsgemäße Polybutadien-Polyurethan-Hotmelt-Prepolymer (Prepolymer 12) setzt sich inklusive des Epoxidharzes wie folgt zusammen:

Zusammensetzung Prepolymer 12 inklusive Epoxidharz:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH-P 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| 3,4-Epoxycyclohexylmethyl-3',4'-epoxycyclohexancarboxylat | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 12 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 12 (inklusive Epoxidharz):

| G' (bei 1 rad /sec und 23 °C) | 7.000 Pa |
|---|---|
| G" (bei 1 rad /sec und 23 °C) | 16.000 Pa |
| G' (bei 10 rad /sec und 23 °C) | 50.000 Pa |
| G" (bei 10 rad /sec und 23 °C) | 70.000 Pa |

(fortgesetzt)

| | |
|---|---|
| Tack bei 23°C | 0,7 N |
| komplexe Viskosität $\eta^*$ bei 10 rad/sec und 23°C | 6.600 Pas |
| komplexe Viskosität $\eta^*$ bei 10 rad/sec und 90°C | 180 Pas |

Verwendung:

Prepolymer 12 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer 12:

| Rohstoff | Gewichtsprozent |
|---|---|
| Prepolymer 12 (exklusive Epoxidharz) | 51,9 |
| 3,4-Epoxycyclohexylmethyl-3',4'-epoxycyclohexan-carboxylat (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 12:

| Prüfkörper | Ölauftrag | Aushärtung | Zugscherfestigkeit [MPa] | Bruchbild |
|---|---|---|---|---|
| Stahl/Stahl | nein | 30 min/ 180°C | 9,4 | kohäsiv |
| Stahl/ Stahl | ja | 30 min/ 180°C | 9,2 | kohäsiv |
| Stahl/ Stahl | ja | 10 min/ 230°C | 8,9 | kohäsiv |
| Elektrolytisch verzinkter Stahl/ Elekrolytisch verzinkter Stahl | ja | 30 min/ 180°C | 8,9 | kohäsiv |
| Feuerverzinkter Stahl/ Feuerverzinkter Stahl | ja | 30 min/ 180°C | 9,2 | kohäsiv |
| KTL-Stahl/ KTL-Stahl | nein | 30 min/ 140°C | 9,4 | kohäsiv |

**Beispiel 13**

Die chemische Umsetzung zum erfindungsgemäßen Polybutadien-Polyurethan-Hotmelt-Prepolymer erfolgte in Gegenwart eines Epoxidharzes. Das erfindungsgemäße Polybutadien-Polyurethan-Hotmelt-Prepolymer (Prepolymer 13) setzt sich inklusive des Epoxidharzes wie folgt zusammen:

Zusammensetzung Prepolymer 13 inklusive Epoxidharz:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 3000 ® | 66,13 | 42,33 mmol OH | 50 |
| 2-Ethyl-1,3-hexandiol ® | 3,09 | 42,33 mmol OH | 50 |
| Coscat 83 ® | 0,15 | | |
| Desmodur W ® | 10,62 | 80,42 mmol NCO | |
| Epikote 828 ® | 20,00 | | |
| Summe | 100,00 | | |

Die Herstellung erfolgte im Laboransatz (1Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 13 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 13 (inklusive Epoxidharz):

| | |
|---|---|
| G' (bei 1 rad /sec und 23 °C) | 6.000 Pa |
| G" (bei 1 rad /sec und 23 °C) | 15.000 Pa |
| G' (bei 10 rad /sec und 23 °C) | 50.000 Pa |
| G" (bei 10 rad /sec und 23 °C) | 80.000 Pa |
| Tack bei 23°C | 1,0 N |
| komplexe Viskosität $\eta$* bei 10 rad/sec und 23°C | 9.400 Pas |
| komplexe Viskosität $\eta$* bei 10 rad/sec und 90°C | 270 Pas |

Verwendung:

Prepolymer 13 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer 13:

| Rohstoff | Gewichtsprozent |
|---|---|
| Prepolymer 13 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 13:

| Prüfkörper | Ölauftrag | Aushärtung | Zugscherfestigkeit [MPa] | Bruchbild |
|---|---|---|---|---|
| Stahl/Stahl | nein | 30 min/ 180°C | 10,8 | kohäsiv |
| Stahl/ Stahl | ja | 30 min/ 180°C | 9,9 | kohäsiv |
| Stahl/ Stahl | ja | 10 min/ 230°C | 10,5 | kohäsiv |
| Elektrolytisch verzinkter Stahl/ Elekrolytisch verzinkter Stahl | ja | 30 min/ 180°C | 10,2 | kohäsiv |
| Feuerverzinkter Stahl/ Feuerverzinkter Stahl | ja | 30 min/ 180°C | 9,9 | kohäsiv |
| KTL-Stahl/ KTL-Stahl | nein | 30 min/ 140°C | 9,0 | kohäsiv |

**Beispiel 14**

Die chemische Umsetzung zum erfindungsgemäßen Polybutadien-Polyurethan-Hotmelt-Prepolymer erfolgte in Gegenwart eines Epoxidharzes. Das erfindungsgemäße Polybutadien-Polyurethan-Hotmelt-Prepolymer (Prepolymer 14) setzt sich inklusive des Epoxidharzes wie folgt zusammen:

Zusammensetzung Prepolymer 14 inklusive Epoxidharz:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,36 | 55,84 mmol OH | 50 |
| 2-Butyl-2-Ethyl-1,3-propandiol | 4,48 | 55,84 mmol OH | 50 |
| Coscat 83 ® | 0,15 | | |
| Desmodur W ® | 14,01 | 106,09 mmol NCO | |
| Epikote 828 ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer 14 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 14 (inklusive Epoxidharz):

| | |
|---|---|
| G' (bei 1 rad /sec und 23 °C) | 10.000 Pa |
| G" (bei 1 rad /sec und 23 °C) | 22.000 Pa |
| G' (bei 10 rad /sec und 23 °C) | 80.000 Pa |
| G" (bei 10 rad /sec und 23 °C) | 100.000 Pa |
| Tack bei 23°C | 0,6 N |
| komplexe Viskosität $\eta$* bei 10 rad/sec und 23°C | 13.000 Pas |

(fortgesetzt)

| | |
|---|---|
| komplexe Viskosität η* bei 10 rad/sec und 90°C | 280 Pas |

Verwendung:

Prepolymer 14 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer 14:

| Rohstoff | Gewichtsprozent |
|---|---|
| Prepolymer 14 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 14:

| Prüfkörper | Ölauftrag | Aushärtung | Zugscherfestigkeit [MPa] | Bruchbild |
|---|---|---|---|---|
| Stahl/Stahl | nein | 30 min/ 180°C | 9,1 | kohäsiv |
| Stahl/ Stahl | ja | 30 min/ 180°C | 8,5 | kohäsiv |
| Stahl/ Stahl | ja | 10 min/ 230°C | 7,9 | kohäsiv |
| Elektrolytisch verzinkter Stahl/ Elekrolytisch verzinkter Stahl | ja | 30 min/ 180°C | 8,3 | kohäsiv |
| Feuerverzinkter Stahl/ Feuerverzinkter Stahl | ja | 30 min/ 180°C | 8,1 | kohäsiv |
| KTL-Stahl/ KTL-Stahl | nein | 30 min/ 140°C | 8,0 | kohäsiv |

**Beispiel 15**

Die chemische Umsetzung zum erfindungsgemäßen Polybutadien-Polyurethan-Hotmelt-Prepolymer erfolgte in Gegenwart eines Epoxidharzes. Das erfindungsgemäße Polybutadien-Polyurethan-Hotmelt-Prepolymer (Prepolymer 15) setzt sich inklusive des Epoxidharzes wie folgt zusammen:

Zusammensetzung Prepolymer 15 inklusive Epoxidharz:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 28,89 | 26,29 mmol OH | 20 |

(fortgesetzt)

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH-Gruppen zueinander |
|---|---|---|---|
| Poly bd R-45 HTLO ® | 31,30 | 26,29 mmol OH | 20 |
| 2-Ethyl-1,3-hexandiol ® | 5,77 | 78,88 mmol OH | 60 |
| Coscat 83 ® | 0,15 | | |
| Desmodur W ® | 13,89 | 105,17 mmol NCO | |
| Epikote 828 ® | 20,00 | | |
| Summe | 100,00 | | |

Die Herstellung erfolgte im Laboransatz (1Liter). Der Gewichtsanteil an Desmodur W ® ist dabei so berechnet, dass das NCO/OH - Verhältnis des Prepolymers 0,80 beträgt. Der theoretische Gelpunkt errechnet sich zu 0,83. Das Prepolymer 15 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer 15 (inklusive Epoxidharz):

| | |
|---|---|
| G' (bei 1 rad /sec und 23 °C) | 1.500 Pa |
| G" (bei 1 rad /sec und 23 °C) | 5.000 Pa |
| G' (bei 10 rad /sec und 23 °C) | 15.000 Pa |
| G" (bei 10 rad /sec und 23 °C) | 60.000 Pa |
| Tack bei 23°C | 1,6 N |
| komplexe Viskosität $\eta$* bei 10 rad/sec und 23°C | 6.200 Pas |
| komplexe Viskosität $\eta$* bei 10 rad/sec und 90°C | 160 Pas |

Verwendung:

Prepolymer 15 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer 15:

| Rohstoff | Gewichtsprozent |
|---|---|
| Prepolymer 15 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer 15:

| Prüfkörper | Ölauftrag | Aushärtung | Zugscherfestigkeit [MPa] | Bruchbild |
|---|---|---|---|---|
| Stahl /Stahl | nein | 30 min/ 180°C | 11,0 | kohäsiv |
| Stahl/ Stahl | ja | 30 min/ 180°C | 10,2 | kohäsiv |
| Stahl/ Stahl | ja | 10 min/ 230°C | 10,4 | kohäsiv |
| Elektrolytisch verzinkter Stahl/ Elekrolytisch verzinkter Stahl | ja | 30 min/ 180°C | 10,8 | kohäsiv |
| Feuerverzinkter Stahl/ Feuerverzinkter Stahl | ja | 30 min/ 180°C | 10,1 | kohäsiv |
| KTL-Stahl/ KTL-Stahl | nein | 30 min/ 140°C | 9,3 | kohäsiv |

**Vergleichsbeispiel 1**

Die chemische Umsetzung zum Polybutadien-Polyether-Polyurethan-Hotmelt-Prepolymer erfolgte in Gegenwart eines Epoxidharzes. Das Polybutadien-Polyether-Polyurethan-Hotmelt-Prepolymer (Prepolymer V1) setzt sich inklusive des Epoxidharzes wie folgt zusammen:

Zusammensetzung Prepolymer V1 inklusive Epoxidharz:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 31,82 | 28,95 mmol OH | 25 |
| Voranol P 2000L ® | 29,27 | 28,95 mmol OH | 25 |
| 2-Ethyl-1,3-hexandiol ® | 4,23 | 57,90 mmol OH | 50 |
| Coscat 83 ® | 0,15 | | |
| Desmodur W ® | 14,53 | 110,01 mmol NCO | |
| Epikote 828 ® | 20,00 | | |
| Summe | 100,00 | | |

Die Herstellung erfolgte im Laboransatz (1Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer V1 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer V1 (inklusive Epoxidharz):

| | |
|---|---|
| G' (bei 1 rad /sec und 23 °C) | 7.000 Pa |
| G" (bei 1 rad /sec und 23 °C) | 18.000 Pa |
| G' (bei 10 rad /sec und 23 °C) | 60.000 Pa |
| G" (bei 10 rad /sec und 23 °C) | 80.000 Pa |
| Tack bei 23°C | 0,9 N |

(fortgesetzt)

| | |
|---|---|
| komplexe Viskosität $\eta^*$ bei 10 rad/sec und 23°C | 10.000 Pas |
| komplexe Viskosität $\eta^*$ bei 10 rad/sec und 90°C | 190 Pas |

Verwendung:

Prepolymer V1 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer V1:

| Rohstoff | Gewichtsprozent |
|---|---|
| Prepolymer V1 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |
| Talkum Pharma M ® | 15,5 |

Es wurden die folgenden Zugscherfestigkeiten erzielt.

Prüfergebnisse des thermisch vulanisierbaren Haftklebstoffs aus Prepolymer V1:

| Prüfkörper | Ölauftrag | Aushärtung | Zugscherfestigkeit [MPa] | Bruchbild |
|---|---|---|---|---|
| Stahl/Stahl | nein | 30 min/ 180°C | 2,7 | adhäsiv |
| Stahl/ Stahl | ja | 30 min/ 180°C | 1,7 | adhäsiv |
| Stahl/ Stahl | ja | 10 min/ 230°C | 1,1 | adhäsiv |
| Elektrolytisch verzinkter Stahl/ Elekrolytisch verzinkter Stahl | ja | 30 min/ 180°C | 1,2 | adhäsiv |
| Feuerverzinkter Stahl/ Feuerverzinkter Stahl | ja | 30 min/ 180°C | 0,7 | adhäsiv |
| KTL-Stahl/ KTL-Stahl | nein | 30 min/ 140°C | 4,3 | kohäsiv |

Es wurden niedrigere Zugscherfestigkeitswerte als in den Beispielen 1-16 erhalten und die Bruchbilder waren überwiegend adhäsiv.

**Vergleichsbeispiel 2**

Die chemische Umsetzung zum Polybutadien-Polyester-Polyurethan-Hotmelt-Prepolymer erfolgte in Gegenwart eines Epoxidharzes. Das Polybutadien-PolyesterPolyurethan-Hotmelt-Prepolymer (Prepolymer V2) setzt sich inklusive des Epoxidharzes wie folgt zusammen:

Zusammensetzung Prepolymer V2 inklusive Epoxidharz:

| Rohstoff | Gewichtsanteil [Gew.-%] | Anzahl der eingebrachten OH beziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 31,24 | 28,42 mmol OH | 25 |
| Desmophen 1652 ® | 30,20 | 28,42 mmol OH | 25 |
| 2-Ethyl-1,3-hexandiol ® | 4,15 | 56,84 mmol OH | 50 |
| Coscat 83 ® | 0,15 | | |
| Desmodur W ® | 14,26 | 107,99 mmol NCO | |
| Epikote 828 ® | 20,00 | | |
| Summe | 100,00 | | |

Die Herstellung erfolgte im Laboransatz (1 Liter). Der Gewichtsanteil an Desmodur W ® ist dabei so berechnet, dass das NCO/OH - Verhältnis des Prepolymers 0,95 beträgt. Der theoretische Gelpunkt errechnet sich zu 1,0. Das Prepolymer V2 (inklusive Epoxidharz) ist bei Raumtemperatur fest, schmelzbar und von der Konsistenz her gummiartig und haftklebrig. Die Prüfergebnisse sind in der folgenden Tabelle zusammengefasst:

Prüfergebnisse Prepolymer V2 (inklusive Epoxidharz):

| | |
|---|---|
| G' (bei 1 rad /sec und 23 °C) | 12.000 Pa |
| G" (bei 1 rad /sec und 23 °C) | 25.000 Pa |
| G' (bei 10 rad /sec und 23 °C) | 90.000 Pa |
| G" (bei 10 rad /sec und 23 °C) | 100.000 Pa |
| Tack bei 23°C | 0,5 N |
| komplexe Viskosität $\eta$* bei 10 rad/sec und 23°C | 13.000 Pas |
| komplexe Viskosität $\eta$* bei 10 rad/sec und 90°C | 290 Pas |

Verwendung:

Prepolymer V2 (inklusive Epoxidharz) wurde zur Herstellung eines thermisch vulkanisierbaren Haftklebstoffs beziehungsweise einer thermisch vulkanisierbaren Haftklebstoffschicht verwendet und dazu gemäß der folgenden Rezeptur im Laboransatz weiter abgemischt. Das bereits während der Prepolymerherstellung eingemischte Epoxidharz ist in der folgenden Tabelle separat aufgeführt.

Zusammensetzung des thermisch vulanisierbaren Haftklebstoffs aus Prepolymer V2:

| Rohstoff | Gewichtsprozent |
|---|---|
| Prepolymer V2 (exklusive Epoxidharz) | 51,9 |
| Epikote 828 ® (aus der Prepolymerherstellung) | 13,0 |
| Mahlschwefel 80/90° | 6,9 |
| MBTS | 2,1 |
| ZBEC | 0,9 |
| TBzTD | 0,9 |
| Printex 60 ® | 8,8 |

(fortgesetzt)

| Rohstoff | Gewichtsprozent |
|---|---|
| Talkum Pharma M ® | 15,5 |

Es wurden die folgenden Zugscherfestigkeiten erzielt.

Prüfergebnisse des thermisch vulanisierbaren Haftklebstoffs aus Prepolymer V2:

| Prüfkörper | Ölauftrag | Aushärtung | Zugscherfestigkeit [MPa] | Bruchbild |
|---|---|---|---|---|
| Stahl/Stahl | nein | 30 min/ 180°C | 3,3 | adhäsiv |
| Stahl/ Stahl | ja | 30 min/ 180°C | 1,9 | adhäsiv |
| Stahl/ Stahl | ja | 10 min/ 230°C | 1,2 | adhäsiv |
| Elektrolytisch verzinkter Stahl/ Elekrolytisch verzinkter Stahl | ja | 30 min/ 180°C | 1,3 | adhäsiv |
| Feuerverzinkter Stahl/ Feuerverzinkter Stahl | ja | 30 min/ 180°C | 1,0 | adhäsiv |
| KTL-Stahl/ KTL-Stahl | nein | 30 min/ 140°C | 3,3 | teils kohäsiv/ teils adhäsiv |

Es wurden niedrigere Zugscherfestigkeitswerte als in den Beispielen 1-16 erhalten und die Bruchbilder waren überwiegend adhäsiv.

**Vergleichsbeispiel 3**

Das Polybutadien-Polyurethan-Hotmelt-Prepolymer (Prepolymer V3) setzt sich wie folgt zusammen:

Zusammensetzung Prepolymer V3:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH-Gruppen zueinander |
|---|---|---|---|
| Krasol LBH 2000 ® | 77,83 | 70,83 mmol OH | 50 |
| 2-Ethyl-1,3-hexandiol ® | 5,18 | 70,83 mmol OH | 50 |
| Coscat 83 ® | 0,15 | | |
| 4,4'-Methylen-bis-(phenylisocyanat) | 16,84 | 134,57 mmol NCO | |
| Summe | 100,00 | | |

Die Herstellung erfolgte im Laboransatz (1Liter). Der Gewichtsanteil an 4,4'-Methylen- bis-(phenylisocyanat) ist dabei so berechnet, dass das NCO/OH - Verhältnis des Prepolymers 0,95 beträgt. Der theoretische Gelpunkt errechnet sich zu 1,0.
Das Prepolymer V3 ist bei Raumtemperatur fest und schmelzbar, aber nicht haftklebrig.

Legende zu den Figuren

Figur 1: Planetwalzenextruder

> 1: Eingabe Präpolymer
> 2: Einlass Schwefel
> 3: Einlass Kreide
> 4: Einlass Premix Talkum & Kalk
> 5: Einlass Premix Ultrabeschleuniger (ZBEC / TBzTD)
> 6: Auslass Compound

Figur 2: Doppelschneckenextruder

> 7: Zuführung Rußdispersion
> 8: Entgasung (< 0,1 bar)
> 9: Blister

**Patentansprüche**

1. Hydroxyl-funktionalisiertes Polybutadien-Polyurethan-Hotmelt-Prepolymer, umfassend das chemische Umsetzungsprodukt
   zumindest eines Polybutadien-Diols,
   zumindest eines Kettenverlängerers mit einer Hydroxyl-Funktionalität von zwei und einer Molmasse von kleiner oder gleich 300 g/mol
   und optional zumindest eines Polybutadien-Polyols mit einer zahlengemittelten, mittleren Funktionalität zwischen größer 2,0 und kleiner oder gleich 3,0
   mit zumindest einem aliphatischen oder alicyclischen Diisocyanat,
   **dadurch gekennzeichnet, dass**
   es sich bei dem Polybutadien-Polyurethan-Hotmelt-Prepolymer um einen Haftklebstoff handelt.

2. Hydroxyl-funktionalisiertes Polybutadien-Polyurethan-Hotmelt-Prepolymer gemäß Anspruch 1, **dadurch gekennzeichnet, dass** das zumindest eine Polybutadien-Diol eine zahlengemittelte mittlere Molmasse zwischen größer 1000 g/mol und kleiner 5000 g/mol, bevorzugt zwischen größer oder gleich 2000 g/mol und kleiner oder gleich 3000 g/mol hat.

3. Hydroxyl-funktionalisiertes Polybutadien-Polyurethan-Hotmelt-Prepolymer gemäß einem der vorangegangenen Ansprüche, **dadurch gekennzeichnet, dass** das optionale zumindest eine Polybutadien-Polyol mit einer zahlengemittelten, mittleren Funktionalität zwischen größer 2,0 und kleiner oder gleich 3,0 eine zahlengemittelte mittlere Molmasse zwischen größer 1000 g/mol und kleiner 5000 g/mol, bevorzugt zwischen größer oder gleich 2000 g/mol und kleiner oder gleich 3000 g/mol hat.

4. Hydroxyl-funktionalisiertes Polybutadien-Polyurethan-Hotmelt-Prepolymer gemäß einem der vorangegangenen Ansprüche, **dadurch gekennzeichnet, dass**
   der anzahlmäßige Anteil der zur Bildung des hydroxyl-funktionalisierten Polybutadien-Polyurethan-Hotmelt-Prepolymers eingebrachten Hydroxylgruppen, die von dem zumindest einen Kettenverlängerer stammen,
   zwischen größer oder gleich 20,0 % und kleiner oder gleich 80,0 %, bevorzugt zwischen größer oder gleich 30,0 % und kleiner oder gleich 70,0 % liegt.

5. Hydroxyl-funktionalisiertes Polybutadien-Polyurethan-Hotmelt-Prepolymer gemäß einem der vorangehenden Ansprüche, **dadurch gekennzeichnet, dass**
   der anzahlmäßige Anteil der zur Bildung des hydroxyl-funktionalisierten Polybutadien-Polyurethan-Hotmelt-Prepolymers eingebrachten Hydroxylgruppen, die von dem optionalen zumindest einen Polybutadien-Polyol mit einer zahlengemittelten, mittleren Funktionalität zwischen größer 2,0 und kleiner oder gleich 3,0 stammen, maximal 50,0 %, bevorzugt maximal 30,0 %, besonders bevorzugt maximal 10,0 %, ganz besonders bevorzugt 0,0% beträgt.

6. Hydroxyl-funktionalisiertes Polybutadien-Polyurethan-Hotmelt-Prepolymer gemäß einem der vorangegangenen Ansprüche, **dadurch gekennzeichnet, dass**
   das zumindest eine aliphatische oder alicyclische Diisocyanat Isophorondiisocyanat und/oder Dicyclohexylmethan-4,4'-diisocyanat ist oder umfasst.

7. Hydroxyl-funktionalisiertes Polybutadien-Polyurethan-Hotmelt-Prepolymer gemäß einem der vorangehenden Ansprüche, **dadurch gekennzeichnet, dass**
das Verhältnis der Gesamtanzahl der Isocyanat-Gruppen zur Gesamtanzahl der Hydroxylgruppen der an der chemischen Umsetzung zum hydroxyl-funktionalisierten Polybutadien-Polyurethan-Hotmelt-Prepolymer beteiligten Stoffe zwischen größer 0,65 und kleiner 1,0, bevorzugt zwischen größer oder gleich 0,7 und kleiner oder gleich 0,975, besonders bevorzugt zwischen größer oder gleich 0,75 und kleiner oder gleich 0,95 liegt.

8. Verfahren zur Herstellung eines Hydroxyl-funktionalisierten Polybutadien-Polyurethan-Hotmelt-Prepolymers gemäß einem der Ansprüche 1 bis 7, **dadurch gekennzeichnet, dass**
die chemische Umsetzung zum hydroxyl-funktionalisierten Polybutadien-Polyurethan-Hotmelt-Prepolymer unter Zusatz eines Katalysators erfolgt, insbesondere eines Bismut und Kohlenstoff enthaltenden Katalysators, bevorzugt eines Bismutcarboxylats oder eines Bismutcarboxylat-Derivats.

9. Verfahren zur Herstellung eines hydroxyl-funktionalisierten Polybutadien-Polyurethan-Hotmelt-Prepolymers gemäß einem der Ansprüche 1 bis 7, **dadurch gekennzeichnet, dass**
die chemische Umsetzung zum hydroxyl-funktionalisierten Polybutadien-Polyurethan-Hotmelt-Prepolymer in Gegenwart eines Epoxidharzes erfolgt.

10. Thermisch vulkanisierbarer Haftklebstoff, **dadurch gekennzeichnet, dass** er als Basiselastomer ein hydroxyl-funktionalisiertes Polybutadien-Polyurethan-Hotmelt-Prepolymer gemäß einem der Ansprüche 1 bis 7 oder ein gemäß einem der Ansprüche 8 bis 9 hergestelltes hydroxyl-funktionalisiertes Polybutadien-Polyurethan-Hotmelt-Prepolymer enthält.

11. Klebeband enthaltend mindestens einen thermisch vulkanisierbaren Haftklebstoff nach Anspruch 10.

12. Verfahren zur Herstellung eines Haftklebebandes gemäß Anspruch 11, **dadurch gekennzeichnet, dass** das Compoundieren und Beschichten des thermisch vulkanisierbaren Haftklebstoffs lösemittelfrei und kontinuierlich erfolgt.

13. Verfahren gemäß Anspruch 12, **dadurch gekennzeichnet, dass** während des lösemittelfreien, kontinuierlichen Compoundierprozesses Vulkanisationsstoffe, Vulkanisationsbeschleuniger und Vulkanisationshilfs- und -zusatzstoffe zudosiert werden.

14. Verfahren gemäß Anspruch 12 oder 13, **dadurch gekennzeichnet, dass** das Compoundieren in einem kontinuierlich arbeitenden Mischaggregat, insbesondere einem Compoundierextruder, durchgeführt wird.

15. Verfahren gemäß Anspruch 14, **dadurch gekennzeichnet, dass** das Mischaggregat ein Planetwalzenextruder ist.

16. Verfahren nach einem der Ansprüche 13 bis 15, **dadurch gekennzeichnet, dass**
das Compoundieren durch Zudosierung der Vulkanisationsstoffe, Vulkanisationsbeschleuniger und Vulkanisationshilfs- und - zusatzstoffe sowie optional weiterer Füll-, Hilfs- und/oder Zusatzstoffe während des kontinuierlichen Compoundierprozesses zumindest teilweise in einen Planetwalzenexteruder erfolgt.

17. Verfahren nach Anspruch 16, dadurch gekkennzeichnet, dass
die Temperatur des Compounds 90°C, bevorzugt 80 °C, nicht überschreitet.

## Claims

1. Hydroxyl-functionalized polybutadiene-polyurethane hotmelt prepolymer, comprising the chemical reaction product of
at least one polybutadiene diol,
at least one chain extender having a hydroxyl functionality of two and a molecular weight of less than or equal to 300 g/mol
and optionally at least one polybutadiene polyol with a number-average functionality between greater than 2.0 and less than or equal to 3,0
with at least one aliphatic or alicyclic diisocyanate,
**characterized in that**
the polybutadiene-polyurethane hotmelt prepolymer is a pressure-sensitive adhesive.

**2.** Hydroxyl-functionalized polybutadiene-polyurethane hotmelt prepolymer according to Claim 1, **characterized in that** the at least one polybutadiene diol has a number-average molecular weight between greater than 1000 g/mol and less than 5000 g/mol, and preferably between greater than or equal to 2000 g/mol and less than or equal to 3000 g/mol.

**3.** Hydroxyl-functionalized polybutadiene-polyurethane hotmelt prepolymer according to one of the preceding claims, **characterized in that** the optional at least one polybutadiene polyol with a number-average functionality between greater than 2.0 and less than or equal to 3.0 has a number-average molecular weight between greater than 1000 g/mol and less than 5000 g/mol, and preferably between greater than or equal to 2000 g/mol and less than or equal to 3000 g/mol.

**4.** Hydroxyl-functionalized polybutadiene-polyurethane hotmelt prepolymer according to one of the preceding claims, **characterized in that**
the numerical proportion of the hydroxyl groups introduced for forming the hydroxyl-functionalized polybutadiene-polyurethane hotmelt prepolymer that originate from the at least one chain extender is between greater than or equal to 20.0% and less than or equal to 80.0% and preferably between greater than or equal to 30.0% and less than or equal to 70.0%.

**5.** Hydroxyl-functionalized polybutadiene-polyurethane hotmelt prepolymer according to one of the preceding claims, **characterized in that**
the numerical proportion of the hydroxyl groups introduced for forming the hydroxyl-functionalized polybutadiene-polyurethane hotmelt prepolymer that originate from the optional at least one polybutadiene polyol with a number-average functionality between greater than 2.0 and less than or equal to 3.0 is a maximum of 50.0%, preferably a maximum of 30.0%, particularly preferably a maximum of 10.0%, and most particularly preferably 0.0%.

**6.** Hydroxyl-functionalized polybutadiene-polyurethane hotmelt prepolymer according to one of the preceding claims, **characterized in that**
the at least one aliphatic or alicyclic diisocyanate is or comprises isophorone diisocyanate and/or dicyclohexylmethane 4,4'-diisocyanate.

**7.** Hydroxyl-functionalized polybutadiene-polyurethane hotmelt prepolymer according to one of the preceding claims, **characterized in that**
the ratio of the total number of isocyanate groups to the total number of hydroxyl groups of the substances participating in the chemical reaction to form the hydroxyl-functionalized polybutadiene-polyurethane hotmelt prepolymer is between greater than 0.65 and less than 1.0, preferably between greater than or equal to 0.7 and less than or equal to 0.975, and particularly preferably between greater than or equal to 0.75 and less than or equal to 0.95.

**8.** Process for preparing a hydroxyl-functionalized polybutadiene-polyurethane hotmelt prepolymer according to one of Claims 1 to 7, **characterized in that**
the chemical reaction to give the hydroxyl-functionalized polybutadiene-polyurethane hotmelt prepolymer is effected with addition of a catalyst, in particular a bismuth and carbon-containing catalyst, preferably a bismuth carboxylate or a bismuth carboxylate derivative.

**9.** Process for preparing a hydroxyl-functionalized polybutadiene-polyurethane hotmelt prepolymer according to one of Claims 1 to 7, **characterized in that**
the chemical reaction to give the hydroxyl-functionalized polybutadiene-polyurethane hotmelt prepolymer is effected in the presence of an epoxy resin.

**10.** Thermally vulcanizable pressure-sensitive adhesive, **characterized in that** it comprises, as base elastomer, a hydroxyl-functionalized polybutadiene-polyurethane hotmelt prepolymer according to one of Claims 1 to 7 or a hydroxyl-functionalized polybutadiene-polyurethane hotmelt prepolymer prepared according to one of Claims 8 to 9.

**11.** Adhesive tape comprising at least one thermally vulcanizable pressure-sensitive adhesive according to Claim 10.

**12.** Process for producing an adhesive tape according to Claim 11, **characterized in that** the compounding and coating of the thermally vulcanizable pressure-sensitive adhesive is effected solventlessly and continuously.

**13.** Method according to Claim 12, **characterized in that** vulcanization materials, vulcanization accelerators and vulcanization auxiliaries and additives are metered in during the solventless, continuous compounding process.

14. Method according to Claim 12 or 13, **characterized in that** the compounding is carried out in a continuously operating mixing assembly, in particular a compounding extruder.

15. Method according to Claim 14, **characterized in that** the mixing assembly is a planetary roller extruder.

16. Method according to one of Claims 13 to 15, **characterized in that**
the compounding is effected at least partly in a planetary roller extruder by metering in the vulcanization materials, vulcanization accelerators and vulcanization auxiliaries and additives and optionally further fillers, auxiliaries and/or additives during the continuous compounding process.

17. Method according to Claim 16, **characterized in that** the temperature of the compound does not exceed 90°C, and preferably 80°C.


**Revendications**

1. Prépolymère thermofusible de polybutadiène-polyuréthane fonctionnalisé par hydroxyle, comprenant le produit de transformation chimique
d'au moins un polybutadiène-diol,
d'au moins un extenseur de chaînes doté d'une fonctionnalité hydroxyle de deux et d'une masse molaire inférieure ou égale à 300 g/mole
et éventuellement d'au moins un polybutadiène-polyol doté d'une fonctionnalité moyenne en nombre supérieure à 2,0 et inférieure ou égale à 3,0 avec au moins un diisocyanate aliphatique ou alicyclique,
**caractérisé en ce que** le prépolymère thermofusible de polybutadiène-polyuréthane est un adhésif autocollant.

2. Prépolymère thermofusible de polybutadiène-polyuréthane fonctionnalisé par hydroxyle selon la revendication 1, **caractérisé en ce que** l'au moins un polybutadiène-diol possède une masse molaire moyenne en nombre supérieure à 1 000 g/mole et inférieure à 5 000 g/mole, préférablement supérieure ou égale à 2 000 g/mole et inférieure ou égale à 3 000 g/mole.

3. Prépolymère thermofusible de polybutadiène-polyuréthane fonctionnalisé par hydroxyle selon l'une quelconque des revendications précédentes, **caractérisé en ce que** l'au moins un polybutadiène-polyol éventuel doté d'une fonctionnalité moyenne en nombre supérieure à 2,0 et inférieure ou égale à 3,0 possède une masse molaire moyenne en nombre supérieure à 1 000 g/mole et inférieure à 5 000 g/mole, préférablement supérieure ou égale à 2 000 g/mole et inférieure ou égale à 3 000 g/mole.

4. Prépolymère thermofusible de polybutadiène-polyuréthane fonctionnalisé par hydroxyle selon l'une quelconque des revendications précédentes, **caractérisé en ce que** la proportion en nombre des groupes hydroxyle introduits pour la formation du prépolymère thermofusible de polybutadiène-polyuréthane fonctionnalisé par hydroxyle, qui proviennent de l'au moins un extenseur de chaînes, est supérieure ou égale à 20,0 % et inférieure ou égale à 80,0 %, préférablement est supérieure ou égale à 30,0 % et inférieure ou égale à 70,0 %.

5. Prépolymère thermofusible de polybutadiène-polyuréthane fonctionnalisé par hydroxyle selon l'une quelconque des revendications précédentes, **caractérisé en ce que** la proportion en nombre des groupes hydroxyle introduits pour la formation du prépolymère thermofusible de polybutadiène-polyuréthane fonctionnalisé par hydroxyle, qui proviennent de l'au moins un polybutadiène-polyol éventuel doté d'une fonctionnalité moyenne en nombre supérieure à 2,0 et inférieure ou égale à 3,0, est de maximum 50,0 %, préférablement de maximum 30,0 %, particulièrement préférablement de maximum 10,0 %, tout particulièrement préférablement est de 0,0 %.

6. Prépolymère thermofusible de polybutadiène-polyuréthane fonctionnalisé par hydroxyle selon l'une quelconque des revendications précédentes, **caractérisé en ce que** l'au moins un diisocyanate aliphatique ou alicyclique comprend un diisocyanate d'isophorone et/ou le 4,4'-diisocyanate de dicyclohexylméthane.

7. Prépolymère thermofusible de polybutadiène-polyuréthane fonctionnalisé par hydroxyle selon l'une quelconque des revendications précédentes, **caractérisé en ce que** le rapport du nombre total des groupes isocyanate sur le nombre total des groupes hydroxyle des matières participant à la transformation chimique pour donner le prépolymère thermofusible de polybutadiène-polyuréthane fonctionnalisé par hydroxyle est supérieur à 0,65 et inférieur à 1,0, préférablement supérieur ou égal à 0,7 et inférieur ou égal à 0,975, particulièrement préférablement supérieur ou égal à 0,75 et inférieur ou égal à 0,95.

8. Procédé pour la préparation d'un prépolymère thermofusible de polybutadiène-polyuréthane fonctionnalisé par hydroxyle selon l'une quelconque des revendications 1 à 7, **caractérisé en ce que** la transformation chimique pour donner le prépolymère thermofusible de polybutadiène-polyuréthane fonctionnalisé par hydroxyle est réalisée avec ajout d'un catalyseur, en particulier d'un catalyseur contenant du bismuth et du carbone, préférablement d'un carboxylate de bismuth ou d'un dérivé de carboxylate de bismuth.

9. Procédé pour la préparation d'un prépolymère thermofusible de polybutadiène-polyuréthane fonctionnalisé par hydroxyle selon l'une quelconque des revendications 1 à 7, **caractérisé en ce que** la transformation chimique pour donner le prépolymère thermofusible de polybutadiène-polyuréthane fonctionnalisé par hydroxyle est réalisée en présence d'une résine époxy.

10. Adhésif autocollant vulcanisable thermiquement, **caractérisé en ce qu'**il contient en tant qu'élastomère de base un prépolymère thermofusible de polybutadiène-polyuréthane fonctionnalisé par hydroxyle selon l'une quelconque des revendications 1 à 7 ou un prépolymère thermofusible de polybutadiène-polyuréthane fonctionnalisé par hydroxyle préparé selon l'une quelconque des revendications 8 et 9.

11. Bande adhésive contenant au moins un adhésif autocollant vulcanisable thermiquement selon la revendication 10.

12. Procédé pour la préparation d'un adhésif autocollant selon la revendication 11, **caractérisé en ce que** le compoundage et le revêtement de l'adhésif autocollant vulcanisable thermiquement sont réalisés sans solvant et en continu.

13. Procédé selon la revendication 12, **caractérisé en ce que** pendant le procédé de compoundage sans solvant, en continu, des matières de vulcanisation, des accélérateurs de vulcanisation et des auxiliaires et des additifs de vulcanisation sont ajoutés.

14. Procédé selon la revendication 12 ou 13, **caractérisé en ce que** le compoundage est mis en œuvre dans un mélangeur travaillant en continu, en particulier dans une extrudeuse de compoundage.

15. Procédé selon la revendication 14, **caractérisé en ce que** le mélangeur est une extrudeuse à vis planétaires.

16. Procédé selon l'une quelconque des revendications 13 à 15, **caractérisé en ce que** le compoundage par ajout des matières de vulcanisation, des accélérateurs de vulcanisation et des auxiliaires et des additifs de vulcanisation ainsi qu'éventuellement d'autres charges, auxiliaires et/ou additifs est réalisé pendant le procédé de compoundage en continu au moins partiellement dans une extrudeuse à vis planétaires.

17. Procédé selon la revendication 16, **caractérisé en ce que** la température du compound ne dépasse pas 90 °C, préférablement 80 °C.

EP 3 519 477 B1

**Fig. 1**

**Fig. 2**

49

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 877069 B1
- DE 3830895 A
- EP 0356715 B1
- JP 59230076 A
- US 3743617 A
- US 3515773 A
- WO 1998030648 A1


**In der Beschreibung aufgeführte Nicht-Patentliteratur**

- **SATAS.** Handbook of Pressure Sensitive Adhesive Technology. 1999, 153-203
- *CHEMICAL ABSTRACTS,* 003077-13-2
- *CHEMICAL ABSTRACTS,* 144-19-4
- *CHEMICAL ABSTRACTS,* 115-84-4
- *CHEMICAL ABSTRACTS,* 94-96-2
- *CHEMICAL ABSTRACTS,* 4098-71-9
- *CHEMICAL ABSTRACTS,* 5124-30-1
- *CHEMICAL ABSTRACTS,* 34364-26-6
- Taschenbuch der Kunststoff-Additive. **GAECHTER ; MÜLLER.** Kirk-Othmer. 1979, vol. 23, 615-627
- Encycl. Polym. Sci. Technol. vol. 14, 125-148
- Ullmann. vol. 8, 21
- ULLMANN. vol. 15, 676
- *CHEMICAL ABSTRACTS,* 25068-38-6
- *CHEMICAL ABSTRACTS,* 2386-87-0
- Ullmann's Encyclopedia of Industrial Chemistry. vol. 12, 271
- Encyclopedia of Polymer Science and Engineering. vol. 6, 345
- *CHEMICAL ABSTRACTS,* 101-68-8
- *CHEMICAL ABSTRACTS,* 28553-12-0
- *CHEMICAL ABSTRACTS,* 27138-31-4
- *CHEMICAL ABSTRACTS,* 166412-78-8
- *CHEMICAL ABSTRACTS,* 77-93-0
- *CHEMICAL ABSTRACTS,* 7704-34-9
- *CHEMICAL ABSTRACTS,* 120-78-5
- *CHEMICAL ABSTRACTS,* 14726-36-4
- *CHEMICAL ABSTRACTS,* 10591-85-2
- *CHEMICAL ABSTRACTS,* 14807-96-6